(19) Europäisches Patentamt
European Patent Office
Office européen des brevets

(11) EP 0 741 163 B1

(12) # EUROPÄISCHE PATENTSCHRIFT

(45) Veröffentlichungstag und Bekanntmachung des Hinweises auf die Patenterteilung:
**12.07.2000 Patentblatt 2000/28**

(51) Int Cl.[7]: **C08K 5/00**, C08K 5/3492, C08K 5/3435, C08K 5/353, C08G 73/06

(21) Anmeldenummer: **96810263.2**

(22) Anmeldetag: **24.04.1996**

(54) **Synergistisches Stabilisatorgemisch**

Synergistic stabiliser composition

Composition de stabilisateurs synergistiques

(84) Benannte Vertragsstaaten:
**BE DE DK ES FR GB IT**

(30) Priorität: **03.05.1995 EP 95810289**

(43) Veröffentlichungstag der Anmeldung:
**06.11.1996 Patentblatt 1996/45**

(73) Patentinhaber: **Ciba Specialty Chemicals Holding Inc.**
**4057 Basel (CH)**

(72) Erfinder: **Gugumus, François, Dr.**
**4123 Allschwil (CH)**

(56) Entgegenhaltungen:
**EP-A- 0 252 877** **EP-A- 0 632 092**

- **RESEARCH DISCLOSURE, Nr. 345, 1.Januar 1993, EMSWORTH, GB, Seiten 32-34, XP000336552 CIBA-GEIGY: "SYNERGISTIC STABILIZER COMPOSITIONS"**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 741 163 B1

Printed by Jouve, 75001 PARIS (FR)

## Beschreibung

Die vorliegende Erfindung betrifft ein Stabilisatorsystem enthaltend zwei spezifische hochmolekulare Polyalkylpiperidinderivate, die Verwendung dieses Stabilisatorsystems zum Stabilisieren von organischem Material sowie das mit dem erwähnten Stabilisatorsystem gegen thermischen, oxidativen oder lichtinduzierten Abbau geschützte organische Material.

In US-A-4 692 486, US-A-4 863 981, US-A-4 957 953, US-A-5 439 959, WO-A-92/12 201, EP-A-449 685, EP-A-632 092, GB-A-2 267 499 und in der Research Disclosure 34549 (Januar 1993) werden Stabilisatorgemische beschrieben, welche zwei Polyalkylpiperidinderivate enthalten.

Ein Gegenstand der vorliegenden Erfindung ist ein Stabilisatorgemisch enthaltend eine Komponente a), b) oder c) und eine Komponente d) oder e), wobei

die Komponente a) mindestens eine Verbindung der Formel I ist,

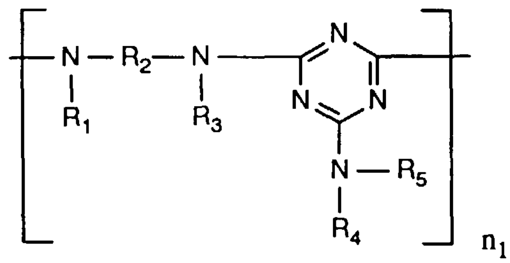

(I)

worin $R_1$, $R_3$, $R_4$ und $R_5$ unabhängig voneinander Wasserstoff, $C_1$-$C_{12}$-Alkyl, $C_5$-$C_{12}$-Cycloalkyl, durch $C_1$-$C_4$-Alkyl substituiertes $C_5$-$C_{12}$-Cycloalkyl, Phenyl, durch -OH und/oder $C_1$-$C_{10}$-Alkyl substituiertes Phenyl, $C_7$-$C_9$-Phenylalkyl, am Phenylrest durch -OH und/oder $C_1$-$C_{10}$-Alkyl substituiertes $C_7$-$C_9$-Phenylalkyl oder eine Gruppe der Formel II bedeuten,

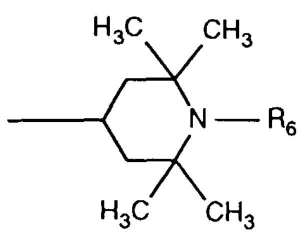

(II)

$R_2$ $C_2$-$C_{18}$-Alkylen, $C_5$-$C_7$-Cycloalkylen oder $C_1$-$C_4$-Alkylendi($C_5$-$C_7$-cycloalkylen) ist oder
die Reste $R_1$, $R_2$ und $R_3$ zusammen mit den Stickstoffatomen, an die sie gebunden sind, einen 5- bis 10-gliedrigen heterocyclischen Ring bilden oder
$R_4$ und $R_5$ zusammen mit dem Stickstoffatom, an das sie gebunden sind, einen 5- bis 10-gliedrigen heterocyclischen Ring bilden,
$R_6$ Wasserstoff, $C_1$-$C_8$-Alkyl, O·, -$CH_2CN$, $C_3$-$C_6$-Alkenyl, $C_7$-$C_9$-Phenylalkyl, am Phenylrest durch $C_1$-$C_4$-Alkyl substituiertes $C_7$-$C_9$-Phenylalkyl oder $C_1$-$C_8$-Acyl ist,
$n_1$ eine Zahl von 2 bis 50 ist und
mindestens einer der Reste $R_1$, $R_3$, $R_4$ und $R_5$ eine Gruppe der Formel II darstellt;

die Komponente b) ein Produkt erhältlich durch Umsetzung eines durch Reaktion eines Polyamins der Formel IIIa mit Cyanursäurechlorid erhaltenen Produktes mit einer Verbindung der Formel IIIb bedeutet,

$$H_2N-(CH_2)_{n_2'}-NH-(CH_2)_{n_2''}-NH-(CH_2)_{n_2'''}-NH_2 \qquad \text{(IIIa)}$$

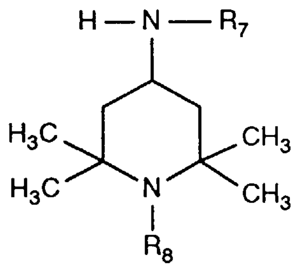

(IIIb)

worin $n_2'$, $n_2''$ und $n_2'''$ unabhängig voneinander eine Zahl von 2 bis 12 sind, $R_7$ Wasserstoff, $C_1$-$C_{12}$-Alkyl, $C_5$-$C_{12}$-Cycloalkyl, Phenyl oder $C_7$-$C_9$-Phenylalkyl ist und $R_8$ eine der für $R_6$ angegebenen Bedeutungen besitzt;

die Komponente c) mindestens eine Verbindung der Formeln IVa und IVb ist,

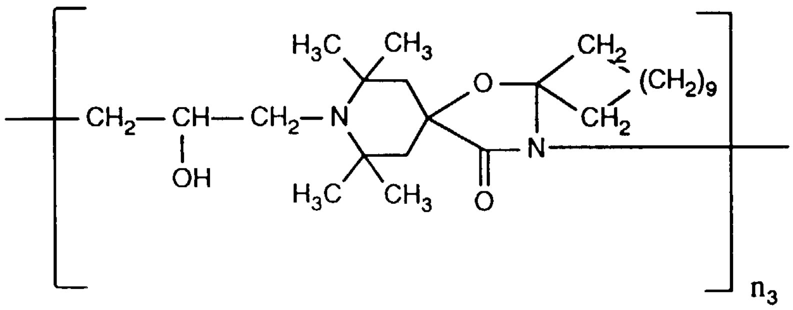

(IVa)

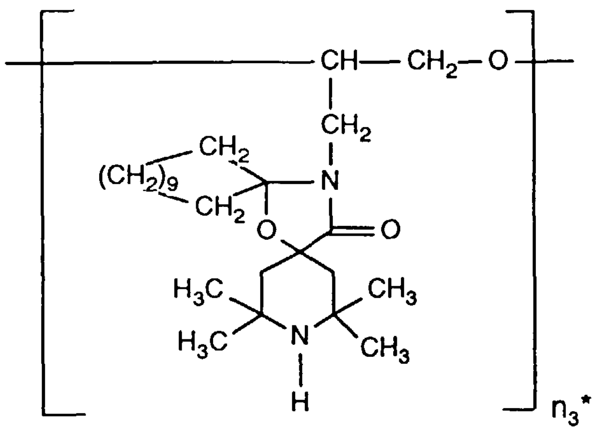

(IVb)

worin $n_3$ und $n_3$* unabhängig voneinander eine Zahl von 2 bis 50 sind; die Komponente d) mindestens eine Verbindung der Formel V ist,

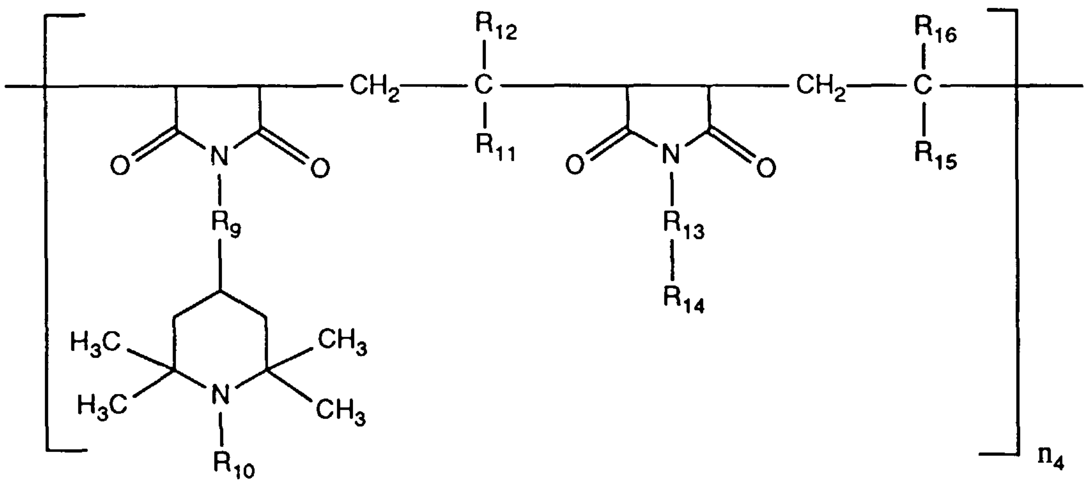

(V)

worin $R_9$ und $R_{13}$ unabhängig voneinander eine direkte Bindung oder eine Gruppe $-N(X_1)-CO-X_2-CO-N(X_3)-$ bedeuten, $X_1$ und $X_3$ unabhängig voneinander Wasserstoff, $C_1$-$C_8$-Alkyl, $C_5$-$C_{12}$-Cycloalkyl, Phenyl, $C_7$-$C_9$-Phenylalkyl oder eine Gruppe der Formel II sind,
$X_2$ eine direkte Bindung oder $C_1$-$C_4$-Alkylen darstellt,
$R_{10}$ eine der für $R_6$ angegebenen Bedeutungen besitzt,
$R_{11}$, $R_{12}$, $R_{15}$ und $R_{16}$ unabhängig voneinander Wasserstoff, $C_1$-$C_{30}$-Alkyl, $C_5$-$C_{12}$-Cycloalkyl oder Phenyl bedeuten,
$R_{14}$ Wasserstoff, $C_1$-$C_{30}$-Alkyl, $C_5$-$C_{12}$-Cycloalkyl, $C_7$-$C_9$-Phenylalkyl, Phenyl oder eine Gruppe der Formel II darstellt und
$n_4$ eine Zahl von 1 bis 50 ist;

die Komponente e) mindestens eine Verbindung der Formel VI ist,

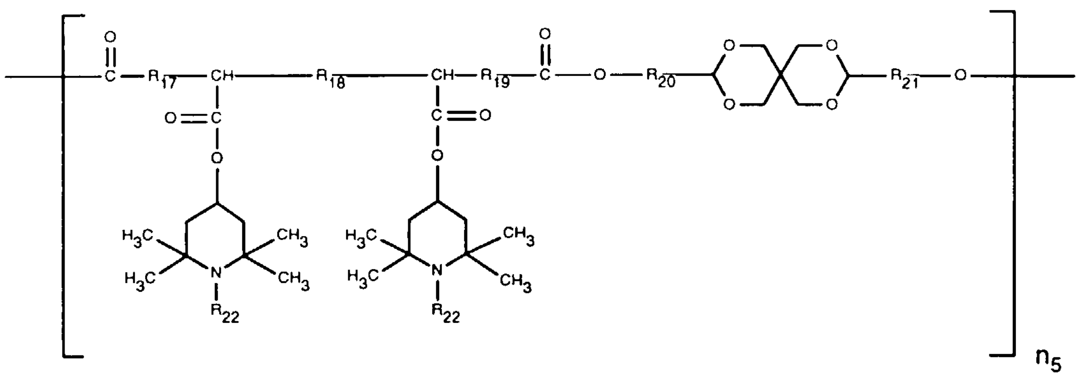

(VI)

worin $R_{17}$, $R_{18}$, $R_{19}$, $R_{20}$ und $R_{21}$ unabhängig voneinander eine direkte Bindung oder $C_1$-$C_{10}$-Alkylen sind,
$R_{22}$ eine der für $R_6$ angegebenen Bedeutungen besitzt und
$n_5$ eine Zahl von 1 bis 50 darstellt.

Beispiele für Alkyl mit bis zu 30 Kohlenstoffatomen sind Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl, Docosyl und Triacontyl. Eine der bevorzugten Bedeutungen von $R_6$, $R_8$, $R_{10}$ und $R_{22}$ ist $C_1$-$C_4$-Alkyl, insbesondere Methyl. Eine der bevorzugten Bedeutungen von

$R_{11}$ und $R_{15}$ ist $C_1$-$C_{25}$-Alkyl, insbesondere $C_{15}$-$C_{25}$-Alkyl, z.B. Hexadecyl und $C_{18}$-$C_{22}$-Alkyl. Eine der bevorzugten Bedeutungen von $R_{14}$ ist $C_1$-$C_{25}$-Alkyl, insbesondere Octadecyl.

Beispiele für $C_5$-$C_{12}$-Cycloalkyl sind Cyclopentyl, Cyclohexyl, Cycloheptyl, Cyclooctyl und Cyclododecyl. $C_5$-$C_8$-Cycloalkyl, insbesondere Cyclohexyl ist bevorzugt.

Durch $C_1$-$C_4$-Alkyl substituiertes $C_5$-$C_{12}$-Cycloalkyl bedeutet zum Beispiel Methylcyclohexyl oder Dimethylcyclohexyl.

Durch -OH und/oder $C_1$-$C_{10}$-Alkyl substituiertes Phenyl bedeutet zum Beispiel Methylphenyl, Dimethylphenyl, Trimethylphenyl, tert-Butylphenyl oder 3,5-Di-tert-butyl-4-hydroxyphenyl.

Beispiele für $C_7$-$C_9$-Phenylalkyl sind Benzyl und Phenylethyl.

Am Phenylrest durch -OH und/oder durch Alkyl mit bis zu 10 Kohlenstoffatomen substituiertes $C_7$-$C_9$-Phenylalkyl bedeutet zum Beispiel Methylbenzyl, Dimethylbenzyl, Trimethylbenzyl, tert-Butylbenzyl oder 3,5-Di-tert-butyl-4-hydroxybenzyl.

Beispiele für $C_3$-$C_6$-Alkenyl sind Allyl, 2-Methallyl, Butenyl, Pentenyl und Hexenyl. Allyl ist bevorzugt.

$C_1$-$C_8$-Acyl bedeutet bevorzugt $C_1$-$C_8$-Alkanoyl, $C_3$-$C_8$-Alkenoyl oder Benzoyl. Beispiele sind Formyl, Acetyl, Propionyl, Butyryl, Pentanoyl, Hexanoyl, Octanoyl, Benzoyl, Acryloyl und Crotonoyl.

Beispiele für Alkylen mit bis zu 18 Kohlenstoffatomen sind Methylen, Ethylen, Propylen, Trimethylen, Tetramethylen, Pentamethylen, 2,2-Dimethyltrimethylen, Hexamethylen, Trimethylhexamethylen, Octamethylen und Decamethylen, $R_2$ bedeutet bevorzugt Hexamethylen, $R_{17}$ und $R_{19}$ bedeuten bevorzugt Methylen, $R_{20}$ bedeutet bevorzugt 2,2-Dimethylethylen und $R_{21}$ 1,1-Dimethylethylen.

Ein Beispiel für $C_5$-$C_7$-Cycloalkylen ist Cyclohexylen.

Ein Beispiel für $C_1$-$C_4$-Alkylendi($C_5$-$C_7$-cycloalkylen) ist Methylendicyclohexylen.

Bilden die Reste $R_1$, $R_2$ und $R_3$ zusammen mit den Stickstoffatomen, an die sie gebunden sind, einen 5- bis 10-gliedrigen heterocyclischen Ring, so handelt es sich beispielweise um

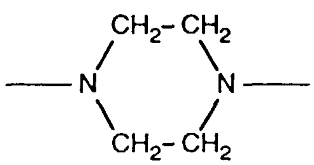 , 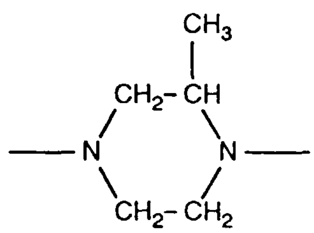 oder 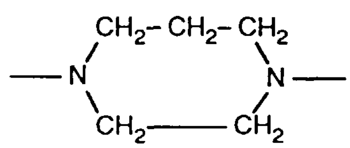 .

Ein 6-gliedriger heterocyclischer Ring ist bevorzugt.

Bilden die Reste $R_4$ und $R_5$ zusammen mit dem Stickstoffatom, an das sie gebunden sind, einen 5- bis 10-gliedrigen heterocyclischen Ring, so handelt es sich beispielsweise um 1-Pyrrolidyl, Piperidino, Morpholino, 1-Piperazinyl, 4-Methyl-1-piperazinyl, 1-Hexahydroazepinyl, 5,5,7-Trimethyl-1-homopiperazinyl oder 4,5,5,7-Tetramethyl-1-homopiperazinyl. Morpholino ist besonders bevorzugt.

Eine der bevorzugten Bedeutungen von $R_{11}$ und $R_{15}$ ist Phenyl.

$X_2$ und $R_{18}$ sind bevorzugt eine direkte Bindung.

$X_1$, $X_3$, $R_6$, $R_8$, $R_{10}$ und $R_{22}$ bedeuten bevorzugt Wasserstoff.

$n_1$ bedeutet bevorzugt 2-25.
$n_2'$, $n_2''$ und $n_2'''$ bedeuten bevorzugt 2-4.
$n_3$ und $n_3^*$ bedeuten bevorzugt 2-25, insbesondere 2-20 oder 2-10.
$n_4$ bedeutet bevorzugt 1-25, insbesondere 1-20 oder 1-10.
$n_5$ bedeutet bevorzugt 1-25, insbesondere 1-20 oder 1-10.

Die als Komponenten a) bis e) beschriebenen Verbindungen sind im wesentlichen bekannt (teilweise im Handel erhältlich) und können nach bekannten Verfahren, zum Beispiel wie in US-A-4 086 204, US-A-4 331 586, US-A-4 477 615 und Chemical Abstracts - CAS No. 136 504-96-6, US-A-4 340 534, US-A-4 857 595, DD-A-262 439 (Derwent 89-122 983/17, Chemical Abstracts 111:58 964u), WO-A-94/12 544 (Derwent 94-177 274/22) und US-A-4 529 760 beschrieben, hergestellt werden.

Die Komponente b) kann in Analogie zu bekannten Verfahren zum Beispiel durch Umsetzung von einem Polyamin der Formel IIIa mit Cyanursäurechlorid in einem molaren Verhältnis von 1:2 bis 1:4 in Gegenwart von wasserfreiem Lithium-, Natrium- oder Kalium-carbonat in einem organischen Lösungsmittel wie 1,2-Dichlorethan, Toluol, Xylol, Benzol, Dioxan oder tert-Amylalkohol bei einer Temperatur von -20°C bis +10°C, bevorzugt -10°C bis +10°C, insbesondere 0°C bis +10°C, während 2 bis 8 Stunden und anschliessender Reaktion des erhaltenen Produktes mit

einem 2,2,6,6-Tetramethyl-4-piperidylamin der Formel IIIb hergestellt werden. Das molare Verhältnis von 2,2,6,6-Tetramethyl-4-piperidylamin zu eingesetztem Polyamin der Formel IIIa beträgt beispielsweise 4:1 bis 8:1. Die Menge an 2,2,6,6-Tetramethyl-4-piperidylamin kann auf einmal oder in mehreren Portionen im Abstand von einigen Stunden zugegeben werden.

Bevorzugt beträgt das Verhältnis Polyamin der Formel IIIa : Cyanursäurechlorid : 2,2,6,6-Tetramethyl-4-piperidylamin der Formel IIIb 1:3:5 bis 1:3:6.

Folgendes Beispiel gibt eine Möglichkeit für die Herstellung der bevorzugten Komponente b) an.

Beispiel: 23,6 g (0,128 Mol) Cyanursäurechlorid, 7,43 g (0,0426 Mol)

N,N'-Bis[3-aminopropyl]ethylendiamine und 18 g (0,13 Mol) wasserfreies Kaliumcarbonat werden in 250 ml 1,2-Dichlorethan bei 5°C unter Rühren während 3 Stunden umgesetzt. Die Mischung wird weitere 4 Stunden auf Raumtemperatur erwärmt. 27,2 g (0,128 Mol) N-(2,2,6,6-tetramethyl-4-piperidyl)butylamin werden hinzugegeben und das erhaltene Gemisch 2 Stunden auf 60°C erwärmt. Es werden nochmals 18 g (0,13 Mol) wasserfreies Kaliumcarbonat hinzugegeben und das Gemisch weitere 6 Stunden bei 60°C erwärmt. Das Lösungsmittel wird unter leichtem Vakuum (200 mbar) abdestilliert und durch Xylen ersetzt. 18,2 g (0,085 Mol) N-(2,2,6,6-tetramethyl-4-piperidyl)butylamin und 5,2 g (0,13 Mol) Natriumhydroxid (ground sodium hydroxide) werden hinzugefügt und das Gemisch am Rückfluss 2 Stunden erhitzt und weitere 12 Stunden wird das bei der Reaktion entstehende Wasser durch azeotrope Destillation entfernt. Das Gemisch wird filtriert. Die Lösung wird mit Wasser gewaschen und über $Na_2SO_4$ getrocknet. Das Lösungsmittel wird verdunstet und der Rückstand bei 120-130°C im Vakuum (0,1 mbar) getrocknet. Die Komponente b) wird als farbloses Harz erhalten.

Allgemein kann die Komponente b) zum Beispiel durch eine Verbindung der Formel III-1, III-2 oder III-3 wiedergegeben werden. Sie kann auch als Gemisch dieser drei Verbindungen vorliegen.

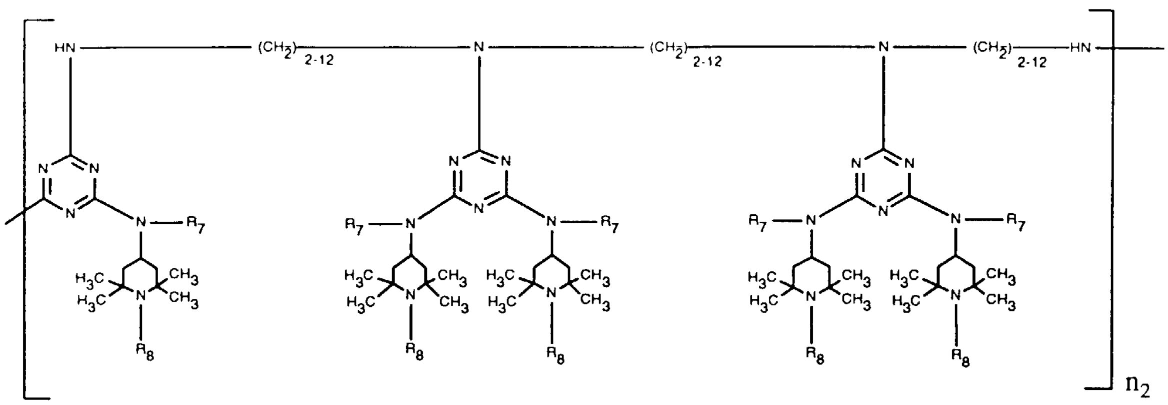

(III-1)

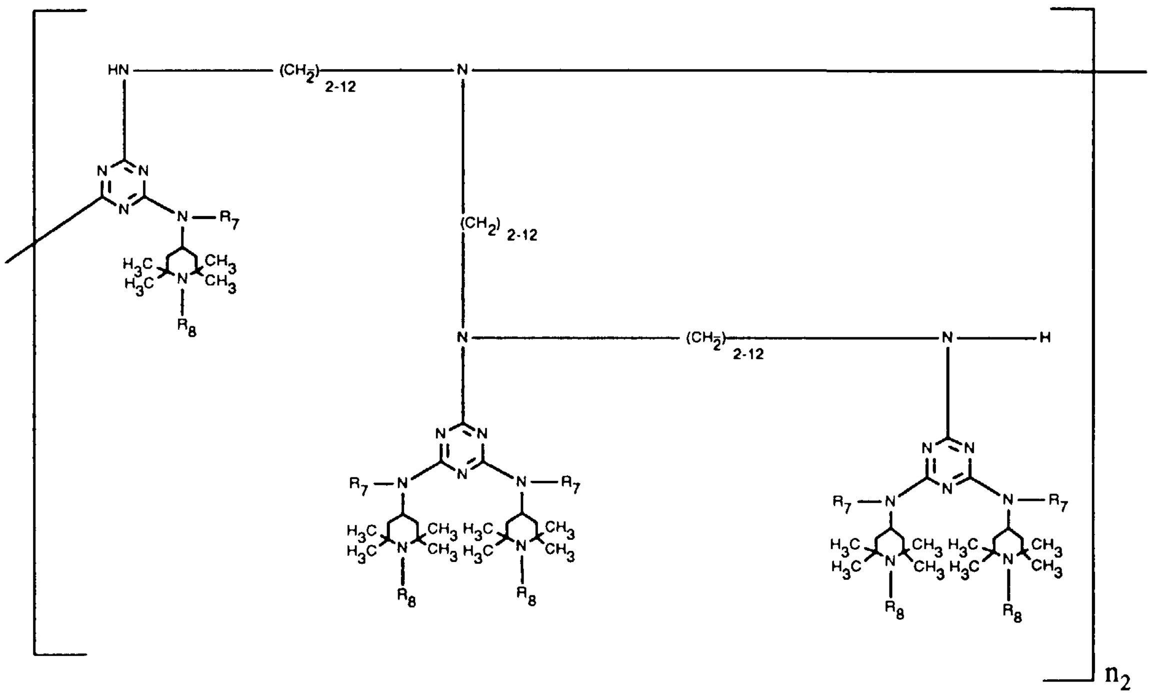

(III-2)

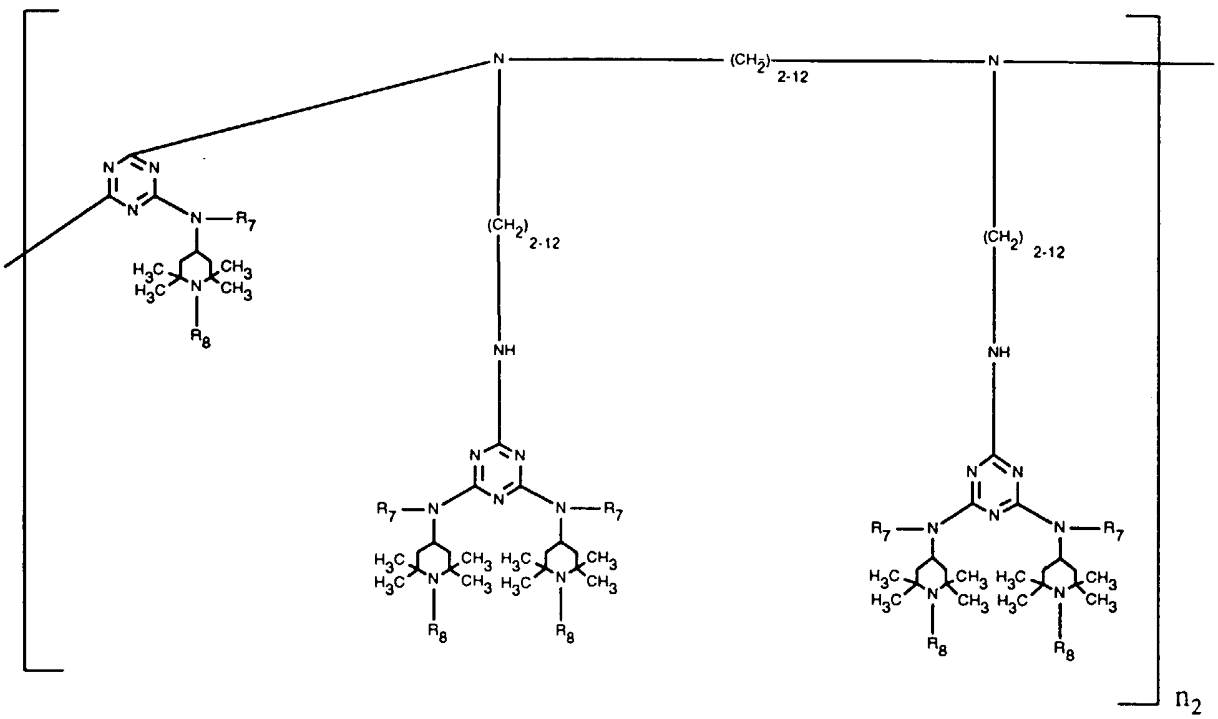

(III-3)

Eine bevorzugte Bedeutung der Formel III-1 ist

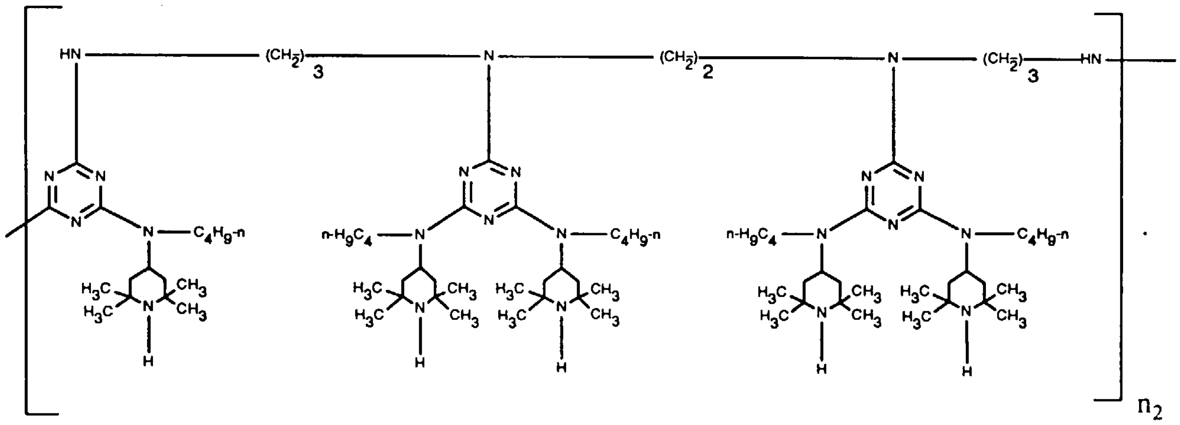

Eine bevorzugte Bedeutung der Formel III-2 ist

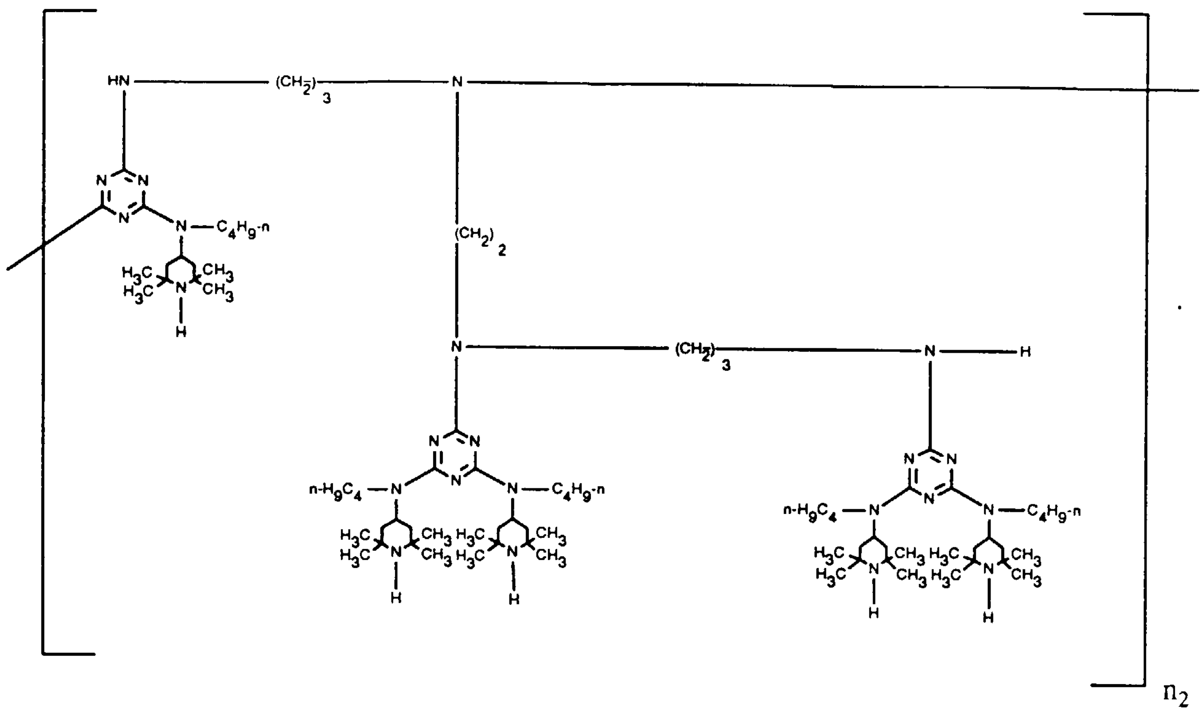

Eine bevorzugte Bedeutung der Formel III-3 ist

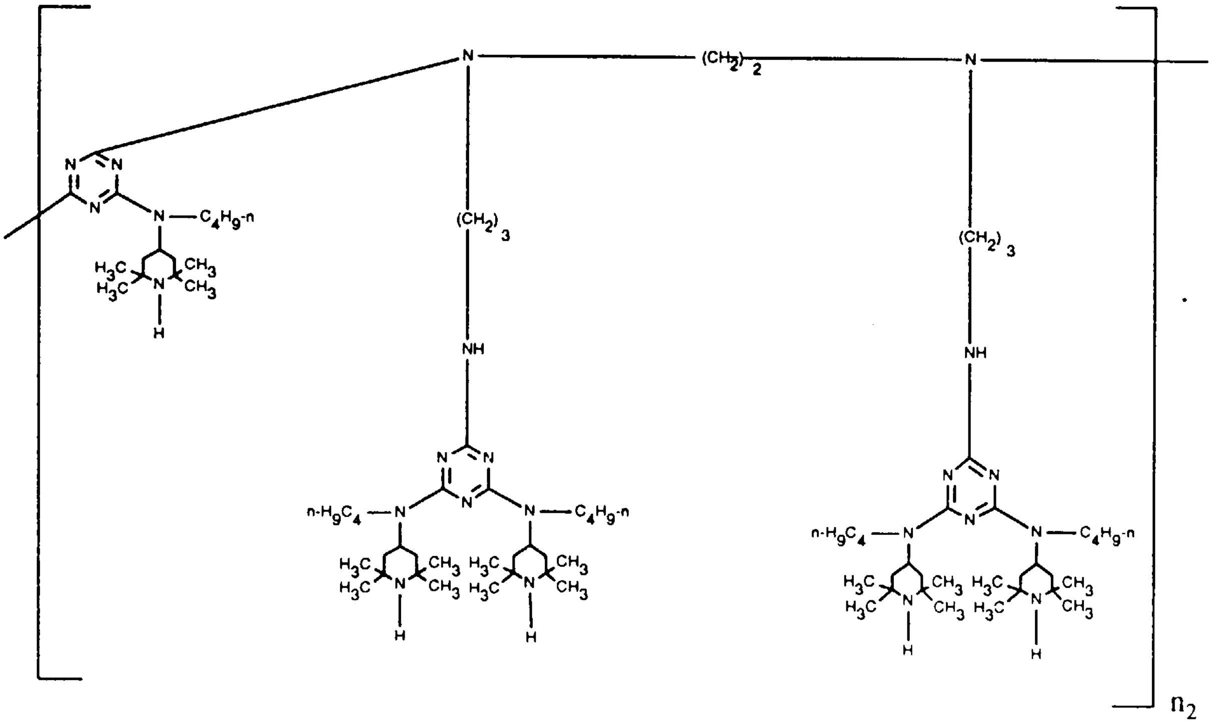

In den oben angegebenen Formeln III-1 bis III-3 bedeutet $n_2$ bevorzugt 1 bis 20, wobei 1 ausgeschlossen ist.

Als Komponente a) wird bevorzugt ®CHIMASSORB 944, ®CYASORB UV 3346 oder ®DASTIB 1082, als Komponente b) ®UVASORB HA 88, als Komponente c) ®HOSTAVIN N 30, als Komponente d) ®UVINUL 5050 H, ®LICHTSCHUTZSTOFF UV 31 oder ®LUCHEM B 18 und als Komponente e) ®MARK LA 63 oder ®MARK LA 68 eingesetzt.

Die Verbindungen der Formeln IVa und IVb können zusammen als Gemisch anfallen und auch als solches als Komponente c) in dem erfindungsgemässen Stabilisatorsystem eingesetzt werden. Das Verhältnis von IVa:IVb beträgt z.B. 20:1 bis 1:20 oder 1:10 bis 10:1.

Die Bedeutungen der Endgruppen, die in den Verbindungen der Formeln I, III-1, III-2, III-3, IVa, IVb, V und VI die freien Valenzen absättigen , sind abhängig von den zur Herstellung benutzten Verfahren. Die Endgruppen können auch nach der Herstellung der Verbindungen noch modifiziert werden.

Erfolgt die Herstellung der Verbindungen der Formel I durch Umsetzung einer Verbindung der Formel

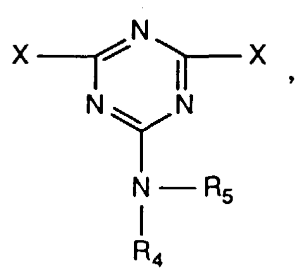

worin X beispielsweise Halogen, insbesondere Chlor, bedeutet und $R_4$ und $R_5$ die oben angegebenen Definitionen besitzen, mit einer Verbindung der Formel

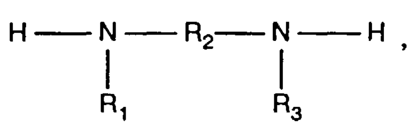

worin $R_1$, $R_2$ und $R_3$ die oben angegebenen Bedeutungen haben, so ist die Endgruppe, die an den Diaminorest gebunden ist, Wasserstoff oder

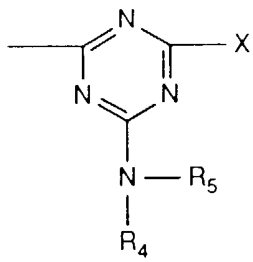

und die Endgruppe, die an den Triazinrest gebunden ist, X oder

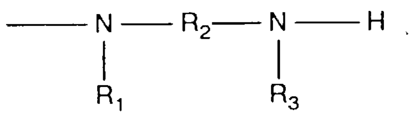

Bedeutet X ein Halogen, so ist es vorteilhaft, dieses nach beendeter Umsetzung z.B. durch -OH oder eine Aminogruppe auszutauschen. Als Beispiele für Aminogruppen seien genannt: Pyrrolidin-1-yl, Morpholino, $-NH_2$, $-N(C_1-C_8\text{-Alkyl})_2$ und $-NR(C_1-C_8\text{-Alkyl})$, worin R Wasserstoff oder eine Gruppe der Formel II ist.

In den Verbindungen der Formel III-1, III-2 und III-3 ist die Endgruppe, die an den Triazinrest gebunden ist, zum Beispiel Cl oder eine Gruppe

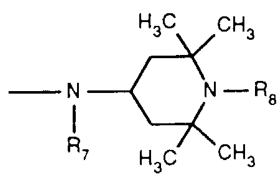

und die Endgruppe, die an den Aminorest gebunden ist, zum Beispiel Wasserstoff oder eine Gruppe

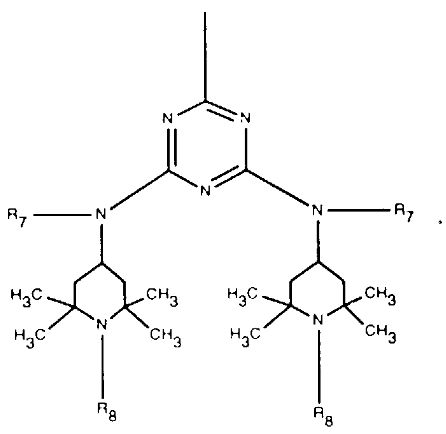

In den Verbindungen der Formel IVa kann die Endgruppe, die an den Stickstoff gebunden ist, z. B. Wasserstoff bedeuten und die Endgruppe, die an den 2-Hydroxypropylenrest gebunden ist, kann z. B. eine Gruppe

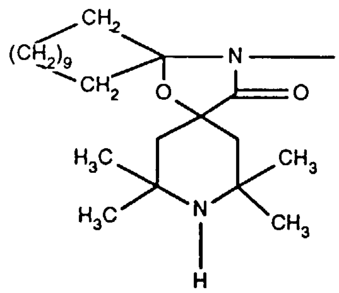

sein.

In den Verbindungen der Formel IVb kann die Endgruppe, die an den Dimethylenrest gebunden ist, z. B. -OH bedeuten und die Endgruppe, die an den Sauerstoff gebunden ist, kann z. B. Wasserstoff sein. Die Endgruppen können auch Polyetherreste darstellen.

In den Verbindungen der Formel V ist die Endgruppe, die an den 2,5-Dioxopyrrolidinring gebunden ist, z.B. Wasserstoff und die Endgruppe, die an den Rest -C($R_{15}$)($R_{16}$)- gebunden ist, z.B.

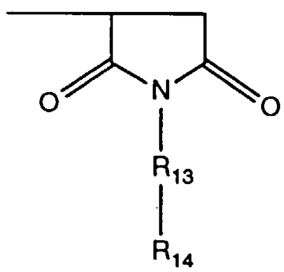

oder

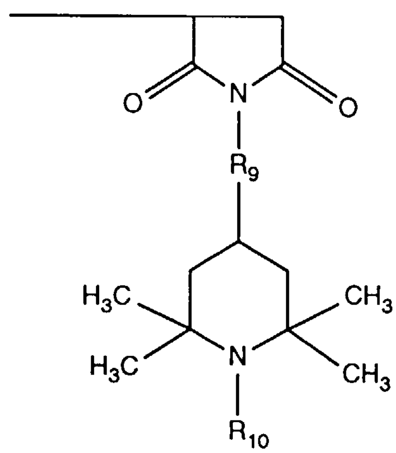

In den Verbindungen der Formel VI ist die Endgruppe, die an den Carbonylrest gebunden ist, z.B.

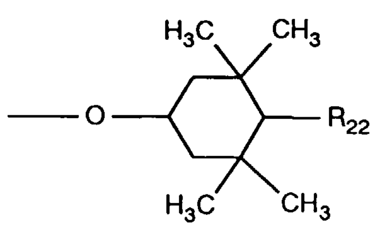

und die Endgruppe, die an den Sauerstoffrest gebunden ist, bedeutet z.B.

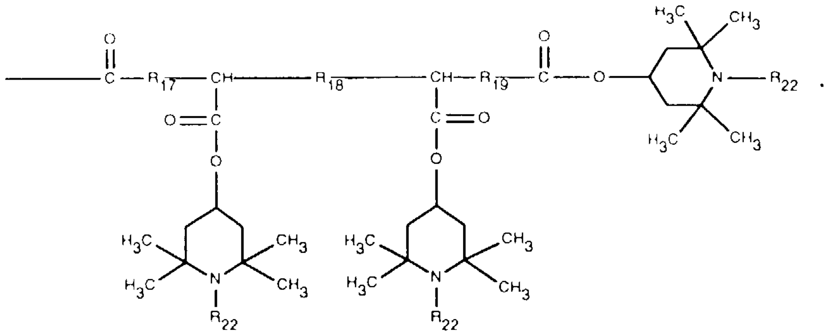

Bevorzugt ist ein Stabilisatorgemisch, worin $R_6$, $R_8$, $R_{10}$ und $R_{22}$ unabhängig voneinander Wasserstoff oder Methyl bedeuten.

Ebenfalls bevorzugt ist ein Stabilisatorgemisch, worin $R_1$, $R_3$, $R_4$ und $R_5$ unabhängig voneinander Wasserstoff, $C_1$-$C_8$-Alkyl, $C_5$-$C_8$-Cycloalkyl, Phenyl, $C_7$-$C_9$-Phenylalkyl oder eine Gruppe der Formel II bedeuten oder

die Reste $R_4$ und $R_5$ zusammen mit dem Stickstoffatom, an das sie gebunden sind, einen 6-gliedrigen heterocyclischen Ring bilden
$R_2$ $C_2$-$C_{10}$-Alkylen ist und
$n_1$ eine Zahl von 2 bis 25 ist;
$n_2'$, $n_2''$ und $n_2'''$ unabhängig voneinander eine Zahl von 2 bis 4 sind und
$R_7$ $C_1$-$C_4$-Alkyl bedeutet;
$n_3$ und $n_3^*$ unabhängig voneinander eine Zahl von 2 bis 25 sind;
$R_9$ und $R_{13}$ eine direkte Bindung oder eine Gruppe -N($X_1$)-CO-$X_2$-CO-N($X_3$)- bedeuten,
$X_1$ und $X_3$ unabhängig voneinander Wasserstoff oder $C_1$-$C_4$-Alkyl sind, $X_2$ eine direkte Bindung ist,
$R_{11}$ und $R_{15}$ $C_1$-$C_{25}$-Alkyl oder Phenyl sind,
$R_{12}$ und $R_{16}$ Wasserstoff oder $C_1$-$C_4$-Alkyl bedeuten,
$R_{14}$ $C_1$-$C_{25}$-Alkyl oder eine Gruppe der Formel II ist und
$n_4$ eine Zahl von 1 bis 25 darstellt;
$R_{17}$, $R_{19}$, $R_{20}$ und $R_{21}$ $C_1$-$C_4$-Alkylen sind,
$R_{18}$ eine direkte Bindung ist und
$n_5$ eine Zahl von 1 bis 25 darsteilt.

Besonders bevorzugt ist ein Stabilisatorgemisch, worin die Komponente a) mindestens eine Verbindung der Formel (I-a), (I-b) oder (I-c) ist,

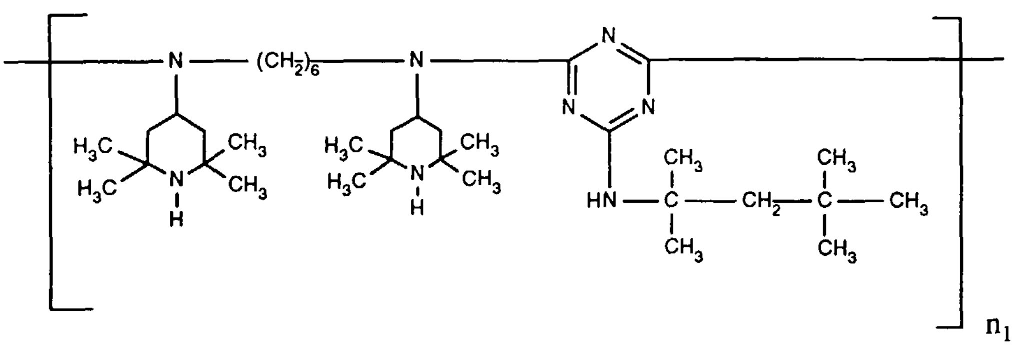

(I-a)

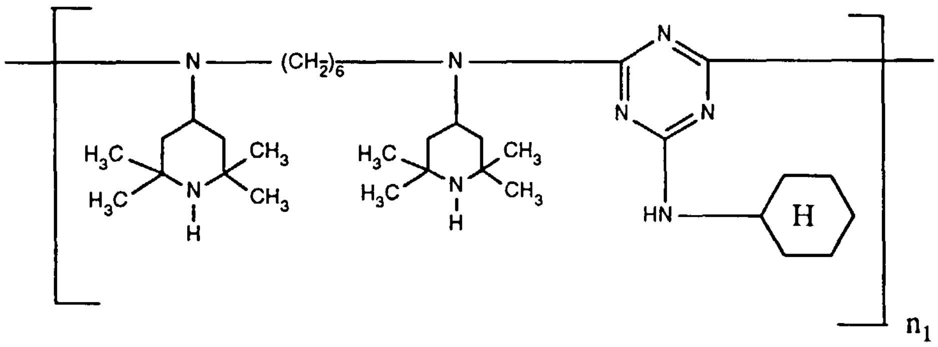

(I-b)

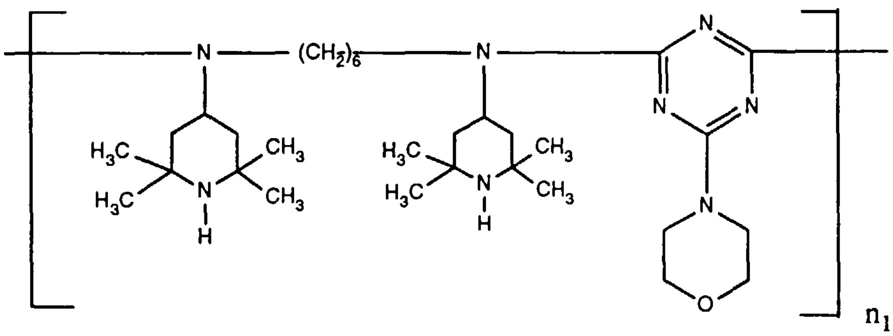

(I-c)

worin $n_1$ eine Zahl von 2 bis 20 bedeutet;
die Komponente b) ein Produkt erhältlich durch Umsetzung eines durch Reaktion eines Polyamins der Formel

$$H_2N-(CH_2)_3-NH-(CH_2)_2-NH-(CH_2)_3-NH_2$$

mit Cyanursäurechlorid erhaltenen Produktes mit einer Verbindung der Formel

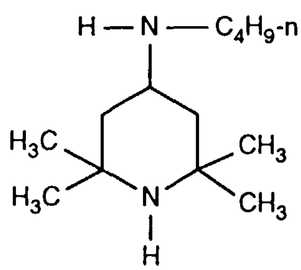

bedeutet;
in der Komponenten c) $n_3$ und $n_3$* unabhängig voneinander eine Zahl von 2 bis 20 sind; die Komponente d) mindestens eine Verbindung der Formel (V-a), (V-b) oder (V-c) ist,

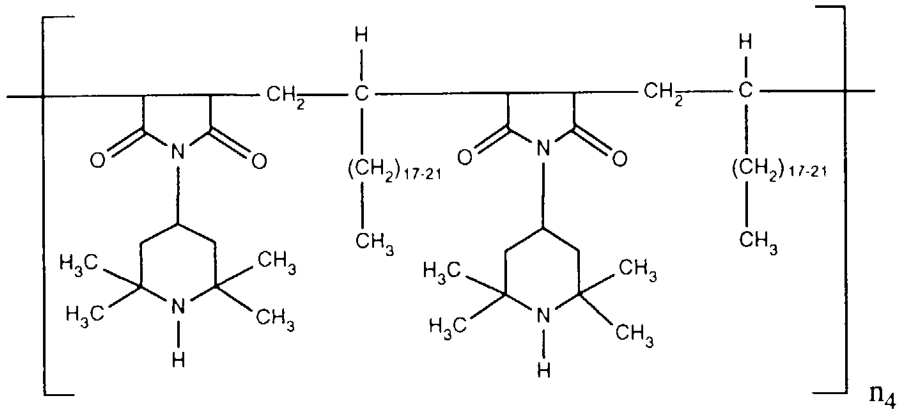

(V-a)

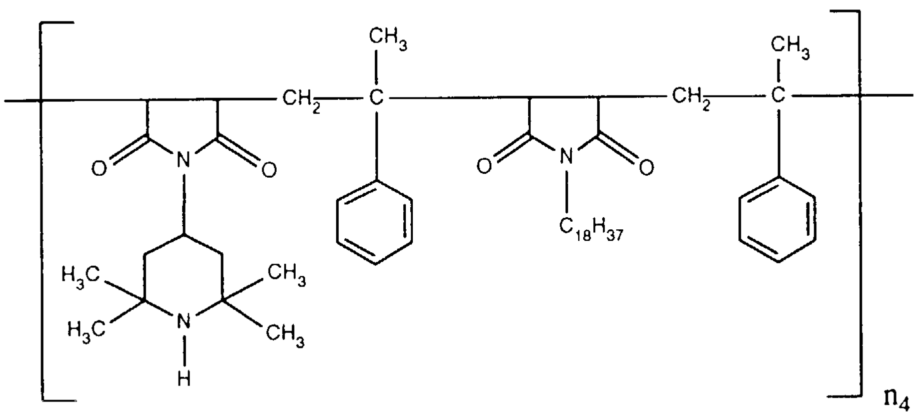

(V-b)

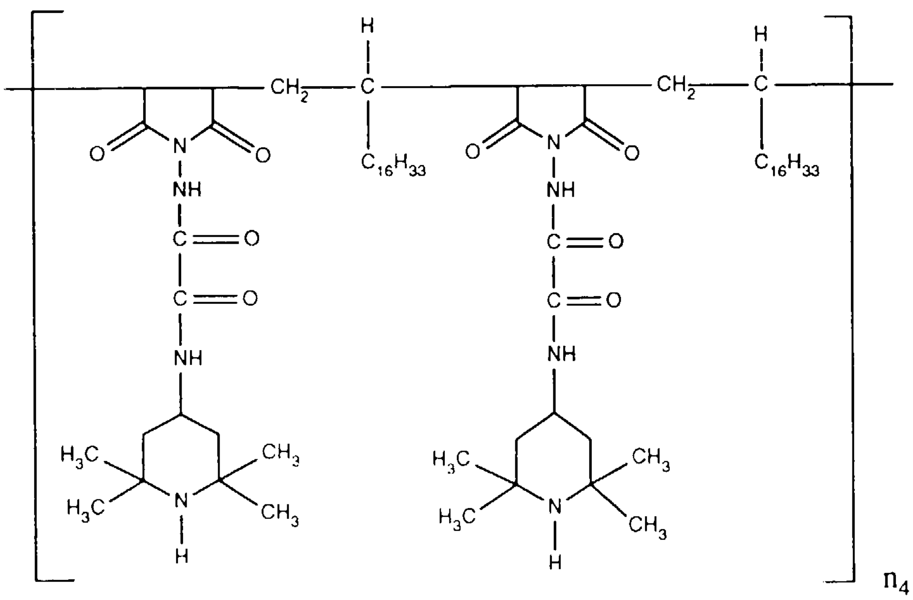

(V-c)

worin $n_4$ eine Zahl von 1 bis 20 ist;
die Komponente e) mindestens eine Verbindung der Formal VI-a ist,

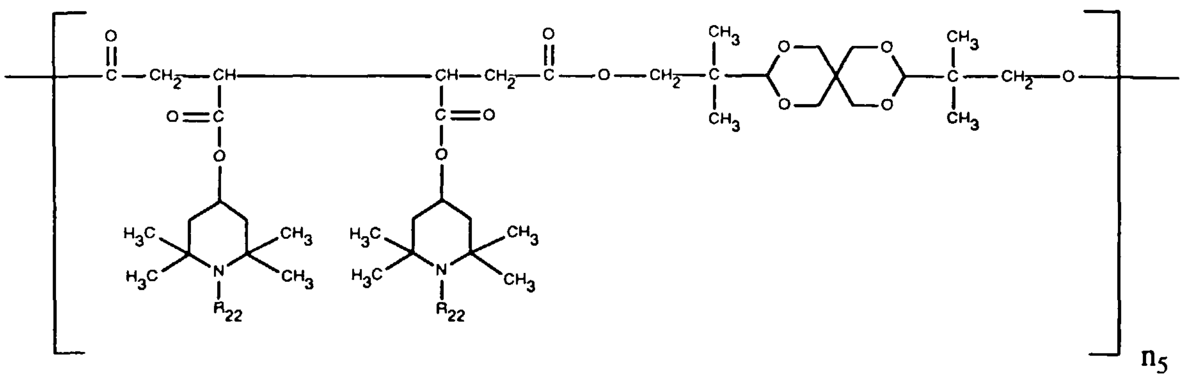

(VI-a)

worin $R_{22}$ Wasserstoff oder Methyl bedeutet und $n_5$ eine Zahl von 1 bis 20 ist.

Folgende Stabilisatorgemische seien als Beispiele genannt:

1) Stabilisatorgemisch enthaltend die Komponenten a) und d),
2) Stabilisatorgemisch enthaltend die Komponenten a) und e),
3) Stabilisatorgemisch enthaltend die Komponenten b) und d),
4) Stabilisatorgemisch enthaltend die Komponenten b) und e),
5) Stabilisatorgemisch enthaltend die Komponenten c) und d) und
6) Stabilisatorgemisch enthaltend die Komponenten c) und e).

Besonders bevorzugt sind folgende Stabilisatorsysteme:

a) Stabilisatorgemisch enthaltend mindestens eine Verbindung der Formel (I-a) und mindestens eine Verbindung der Formel (V-a), (V-b), (V-c) oder (VI-a),
b) Stabilisatorgemisch enthaltend mindestens eine Verbindung der Formel (I-b) und mindestens eine Verbindung der Formel (V-a), (V-b), (V-c) oder (VI-a),
c) Stabilisatorgemisch enthaltend mindestens eine Verbindung der Formel (I-c) und mindestens eine Verbindung der Formel (V-a), (V-b), (V-c) oder (VI-a),
d) Stabilisatorgemisch enthaltend ein Produkt - erhältlich durch Umsetzung eines durch Reaktion eines Polyamins der Formel

$$H_2N-(CH_2)_3-NH-(CH_2)_2-NH-(CH_2)_3-NH_2$$

mit Cyanursäurechlorid erhaltenen Produktes mit einer Verbindung der Formel

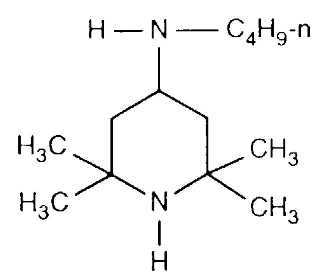

- und mindestens eine Verbindung der Formel (V-a), (V-b), (V-c) oder (VI-a) und
e) Stabilisatorgemisch enthaltend mindestens eine Verbindung der Formeln IVa und IVb und mindestens eine Verbindung der Formel (V-a), (V-b), (V-c) oder (VI-a).

Beispielhaft seien insbesondere die folgenden Kombinationen genannt:

®CHIMASSORB 944/UVINUL 5050 H,
®CHIMASSORB 944/®LICHTSCHUTZSTOFF UV 31,
®CHIMASSORB 944/®LUCHEM B 18, ®CHIMASSORB 944/®MARK LA 63,
®CHIMASSORB 944/®MARK LA 68,
®CYASORB UV 3346/UVINUL 5050 H,
®CYASORB UV 3346/®LICHTSCHUTZSTOFF UV 31,
®CYASORB UV 3346/®LUCHEM B 18, ®CYASORB UV 3346/®MARK LA 63,
®CYASORB UV 3346/®MARK LA 68,
®DASTIB 1082/UVINUL 5050 H, ®DASTIB 1082/®LICHTSCHUTZSTOFF UV 31,
®DASTIB 1082/®LUCHEM B 18, ®DASTIB 1082/®MARK LA 63,
®DASTIB 1082/®MARK LA 68,
®UASORB HA 88/®UVINUL 5050 H,
®UVASORB HA 88/®LICHTSCHUTZSTOFF UV 31,
®UVASORB HA 88/®LUCHEM B 18, ®UVASORB HA 88/®MARK LA 63,
®UVASORB HA 88/®MARK LA 68,
®HOSTAVIN N 30/®UVINUL 5050 H,
®HOSTAVIN N 30/®LICHTSCHUTZSTOFF UV 31,
®HOSTAVIN N 30/®LUCHEM B 18, ®HOSTAVIN N 30/®MARK LA 63 und
®HOSTAVIN N 30/®MARK LA 68,

Gegenstand der Erfindung ist auch ein Stabilisatorgemisch enthaltend unabhängig voneinander 2 Verbindungen ausgewählt aus den oben definierten Komponenten d) und e) mit der Bedingung, dass diese Verbindungen nicht gleich sein dürfen.

Bevorzugt sind Stabilisatorgemische enthaltend unabhängig voneinander 2 Komponenten ausgewählt aus der Gruppe bestehend aus den Komponenten d-1), d-2), d-3), e-1) und e-2), wobei die Komponenten verschieden sind und die Komponente d-1) mindestens eine Verbindung der Formel V-a, die Komponente d-2) mindestens eine Verbindung der Formel V-b, die Komponente d-3) mindestens eine Verbindung der Formel V-c, die Komponente e-1) mindestens eine Verbindung der Formel VI-a, worin $R_{22}$ Wasserstoff bedeutet, und die Komponente e-2) mindestens eine Verbindung der Formel VI-a, worin $R_{22}$ Methyl ist, bedeuten und die Formeln V-a, V-b, V-c und VI-a die oben angegebenen Definitionen besitzen.

Besonders bevorzugt sind auch folgende Stabilisatorsysteme:

I) Stabilisatorgemisch enthaltend die Komponente d-1) und die Komponente d-2), d-3), e-1) oder e-2),
II) Stabilisatorgemisch enthaltend die Komponente d-2) und die Komponente d-3), e-1) oder e-2),
III) Stabilisatorgemisch enthaltend die Komponente d-3) und die Komponente e-1) oder e-2) und
IV) Stabilisatorgemisch enthaltend die Komponenten e-1) und e-2).

Beispielhaft seien insbesondere die folgenden Kombinationen genannt:

®UVINUL 5050 H/®LICHTSCHUTZSTOFF UV 31,
®UVINUL 5050 H/®LUCHEM B18, ®UVINUL 5050 H/®MARK LA 63,
®UVINUL 5050 H/®MARK LA 68,
®LICHTSCHUTZSTOFF UV 31/®LUCHEM B18,
®LICHTSCHUTZSTOFF UV 31/®MARK LA 63,
®LICHTSCHUTZSTOFF UV 31/®MARK LA 68,
®LUCHEM B18/®MARK LA 63, ®LUCHEM B18/®MARK LA 68 und
®MARK LA 63/®MARK LA 68.

Die erfindungsgemässen Stabilisatorgemische eignen sich zum Stabilisieren von organischen Materialien gegen thermischen, oxidativen oder lichtinduzierten Abbau. Beispiele für derartige Materialien sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen

niederer Dichte (LLDPE), verzweigtes Polyethylen niederer Dichte (VLDPE).

Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:

a) radikalisch (gewöhnlich bei hohem Druck und hoher Temperatur).

b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder $\pi$- oder $\sigma$-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Co-polymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

4. Kohlenwasserstoffharze (z.B. $C_5$-$C_9$) inklusive hydrierte Modifikationen davon (z.B. Klebrigmacherharze) und Mischungen von Polyalkylenen und Stärke.

5. Polystyrol, Poly-(p-methylstyrol), Poly-($\alpha$-methylstyrol).

6. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

7. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.

8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

9. Polymere, die sich von $\alpha,\beta$-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.

10. Copolymere der unter 9) genannten Monomeren untereinander oder mit anderen ungesättigten Monomeren,

wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

12. Homo- und Copolymere von cyclischen Ethern, wie Polyalkylenglykole, Polyethylenoxyd, Polypropylenoxyd oder deren Copolymere mit Bisglycidylethern.

13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

14. Polyphenylenoxide und -sulfide und deren Mischungen mit Styrolpolymeren oder Polyamiden.

15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

17. Polyharnstoffe, Polyimide, Polyamid-imide, Polyetherimide, Polyesterimide, Polyhydantoine und Polybenzimidazole.

18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

19. Polycarbonate und Polyestercarbonate.

20. Polysulfone, Polyethersulfone und Polyetherketone.

21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

22. Trocknende und nicht-trocknende Alkydharze.

23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

24. Vernetzbare Acrylharze, die sich von substituierten Acrylsäureestern ableiten, wie z.B. von Epoxyacrylaten, Urethan-acrylaten oder Polyester-acrylaten.

25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.

26. Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethem, die mittels üblichen Härtern wie z.B. Anhydriden oder Aminen mit oder ohne Beschleunigern vernetzt werden.

27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

30. Wässrige Emulsionen natürlicher oder synthetischer Kautschuke, wie z.B. Naturkautschuk-Latex oder Latices von carboxylierten Styrol-Butadien-Copolymeren.

Ein weiterer Gegenstand der Erfindung ist daher eine Zusammensetzung enthaltend ein gegen oxidativen,

thermischen oder lichtinduzierten Abbau empfindliches organisches Material und eines der erfindungsgemässen Stabilisatorgemische.

Bei dem organischen Material handelt es sich vorzugsweise um synthetische Polymere, insbesondere solche aus den oben angegebenen Gruppen. Polyolefine sind bevorzugt und Polyethylen, Polypropylen und deren Copolymere sind besonders bevorzugt.

Die Komponenten der erfindungsgemässen Stabilisatorsysteme können einzeln oder miteinander vermischt dem zu stabilisierenden Material zugesetzt werden. Dabei können die Komponenten unabhängig voneinander in Mengen von 0,01 bis 4,99 % eingesetzt werden mit der Bedingung, dass die Gesamtmenge an Komponente a), b) oder c) und Komponente d) oder e), die Gesamtmenge der zwei Verbindungen ausgewählt aus den Komponenten d) und e) beziehungsweise die Gesamtmenge der zwei Komponenten ausgewählt aus den Komponenten d-1), d-2), d-3), e-1) und e-2) 0,02 bis 5 %, bezogen auf das Gesamtgewicht des zu stabilisierenden Materials beträgt.

Bevorzugt beträgt die Gesamtmenge an Komponente a), b) oder c) und Komponente d) oder e), die Gesamtmenge der zwei Verbindungen ausgewählt aus den Komponenten d) und e) beziehungsweise die Gesamtmenge der zwei Komponenten ausgewählt aus den Komponenten d-1), d-2), d-3), e-1) und e-2) 0,05 bis 3 %, insbesondere 0,05 bis 2 % oder 0,05 bis 1%, bezogen auf das Gesamtgewicht des zu stabilisierenden Materials.

Das Gewichtsverhältnis der Komponenten a), b) oder c) zur Komponente d) oder e), das Gewichtsverhältnis der zwei Verbindungen ausgewählt aus den Komponenten d) und e) zueinander beziehungsweise das Gewichtsverhältnis der zwei Komponenten ausgewählt aus den Komponenten d-1), d-2), d-3), e-1) und e-2) zueinander beträgt bevorzugt 20:1 bis 1:20, insbesondere 10:1 bis 1:10, beispielsweise 1:5 bis 5:1 oder 1:2 bis 2:1 oder auch 1:1.

Die Einarbeitung des erfindungsgemässen Stabilisatorgemisches bzw. der Einzelkomponenten in das organische Material kann nach bekannten Methoden erfolgen, beispielsweise vor oder während der Formgebung oder durch Aufbringen der gelösten oder dispergierten Verbindungen auf das organische Material, gegebenenfalls unter nachträglichem Verdunsten des Lösungsmittels. Die einzelnen Komponenten der erfindungsgemässen Stabilisatorgemische können als Pulver, Granulat oder auch in Form eines Masterbatches, der diese beispielsweise in einer Konzentration von 2,5 bis 25 Gew.-% enthält, den zu stabilisierenden Materialien zugesetzt werden.

Falls gewünscht, können die Komponenten der erfindungsgemässen Stabilisatorsysteme vor der Einarbeitung in der Schmelze miteinander vermischt werden (melt-blending).

Die erfindungsgemässen Stabilisatorsysteme oder deren Komponenten können vor oder während der Polymerisation oder vor der Vernetzung zugegeben werden.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Die stabilisierten organischen Materialien der Erfindung können zusätzlich auch verschiedene herkömmliche Additive enthalten, wie beispielsweise:

1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-($\alpha$-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyl-oxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.

1.4. Tocopherole, z.B. $\alpha$-Tocopherol, $\beta$-Tocopherol, $\gamma$-Tocopherol, $\delta$-Tocopherol und Mischungen davon (Vitamin E).

1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis (3,6-di-sec.-amylphenol), 4,4'-Bis(2,6-dimethyl-4-hydroxyphenyl)-disulfid.

1.6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis-(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercapto-butan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.

1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.

1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.

1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.

1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris (3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.

1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris (hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.17. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis(3,5-di-tert-butyl-4-hydroxyphenylpropionyl)-trimethylendiamin, N,N'-Bis(3,5-di-tert-butyl-4-hydroxyphenylpropionyl)-hydrazin.

1.18. Ascorbinsäure (Vitamin C).

1.19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylaminophenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.

2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl- 2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'-hydroxy-5'-(2-octyloxycarbonylethyl)-phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; $[R-CH_2CH_2-COO(CH_2)_3]_2$ mit R = 3'-tert-Butyl-4'-hydroxy-5'-2H-benzotriazol-2-yl-phenyl.

2.2. 2-Hydroxybenzophenone, wie z.B. das 4-Hydroxy-, 4-Methoxy-, 4-Octoxy-, 4-Decyl-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert-Butyl-phenyl-salicylat, Phenylsalicylat, Octylphenyl-salicylat, Dibenzoylresorcin, Bis(4-tert-butyl-benzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis(2,2,6,6-tetramethyl-piperidin-4-yl)-sebacat, Bis(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis (2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2,6,6-tetramethylpiperidyl)-sebacat, Bis(1-octyloxy-2,2,6,6-tetramethylpiperidyl)-succinat, Kondensationsprodukt aus N,N'-Bis(2,2,6,6-tetrameihyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)-ethan, Kondensationsprodukt aus 2-Chlor-4,6-di-(4-n-butylamino-1,2,2,6,6-pentamethylpiperidyl)-1,3,5-triazin und 1,2-Bis (3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl- 1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondenstionsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro[4,5]decan und Epichlorhydrin.

2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis (2,4-dimethylphenyl)-1,3,5-triazin, 2,4-Bis(2hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis-(2,4-dimethylphenyl)-1,3,5-triazin, 2-[2-Hydroxy-4-(2-hydroxy-3-butyloxy-propyloxy)-phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin.

3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N, N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris (nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis (2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)-methylphosphit, Bis-(2,4-di-tert-butyl-6-methylphenyl)-ethylphosphit.

5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.

6. Nitrone wie z.B. N-Benzyl-alpha-phenyl-nitron, N-Ethyl-alpha-methyl-nitron, N-Octyl-alpha-heptyl-nitron, N-Lauryl-alpha-undecyl-nitron, N-Tetradecyl-alpha-tridecylnitron, N-Hexadecyl-alpha-pentadecyl-nitron, N-Octadecyl-alpha-heptadecyl-nitron, N-Hexadecyl-alpha-heptadecyl-nitron, N-Ocatadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.

7. Thiosynergisten wie z.B. Thiodipropionsäure-di-laurylester oder Thiodipropionsäure-di-stearylester.

8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.

9. Polyamidstabilisatoren, wie z.B. Kupfersalze in Kombination mit Jodiden und/oder Phosphorverbindungen und Salze des zweiwertigen Mangans.

10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").

12. Füllstoffe und Verstärkungsmittel, wie z.B. Calciumcarbonat, Silikate, Glasfasern, Glaskugeln, Asbest, Talk, Kaolin, Glimmer, Bariumsulfat, Metalloxide und -hydroxide, Ruß, Graphit, Holzmehl und Mehle oder Fasern anderer Naturprodukte, synthetische Fasern.

13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.

14. Benzofuranone bzw. Indolinone, wie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis[5,7-di-tert-butyl-3-(4-[2-hydroxyethoxy]-phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Das Gewichtsverhältnis von erfindungsgemässem Stabilisatorgemisch zu den herkömmlichen Additiven kann beispielsweise 1:0,5 bis 1:5 betragen.

Ein weiterer Gegenstand der Erfindung ist die Verwendung der erfindungsgemässen Stabilisatorgemische zum Stabilisieren von organischem Material gegen oxidativen, thermischen oder lichtinduzierten Abbau.

Die mit einem erfindungsgemässen Stabilisatorsystem stabilisierten organischen Materialien zeichnen sich nicht nur durch eine wesentlich verbesserte Lichtbeständigkeit sondern auch zum Teil durch eine verbesserte thermische Beständigkeit aus.

Das folgende Beispiel erläutert die Erfindung weiter. Alle Prozentangaben beziehen sich auf das Gewicht, sofern nichts anderes angegeben ist.

**Die in den Beispielen 1 und 2 verwendeten Lichtschutzmittel**:

(Es wird jeweils der mittlere Polymerisationsgrad angegeben.)

*Verbindung A-1:*

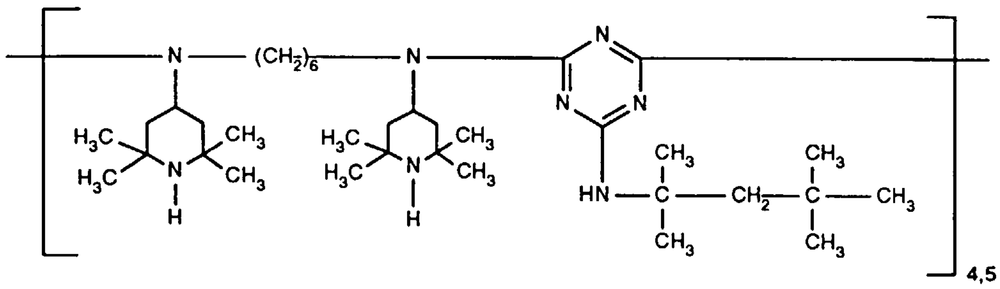

*Verbindung A-2:*

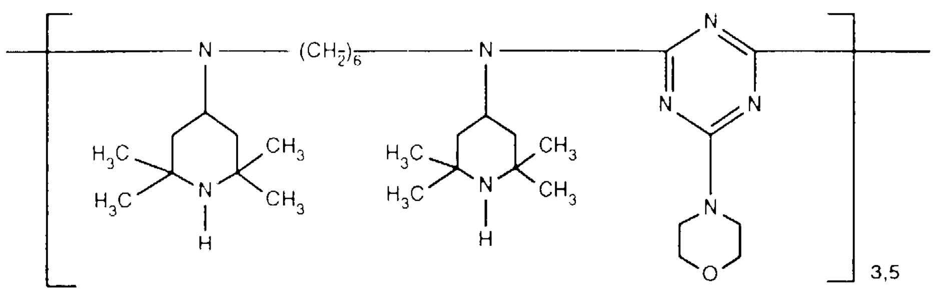

*Verbindung B:*

Verbindung erhältlich durch Umsetzung eines durch Reaktion eines Polyamins der Formel

$$H_2N-(CH_2)_3-NH-(CH_2)_2-NH-(CH_2)_3-NH_2$$

mit Cyanursäurechlorid erhaltenen Produktes mit einer Verbindung der Formel

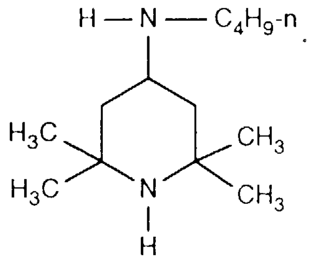

*Verbindung C :*

Gemisch der Verbindungen

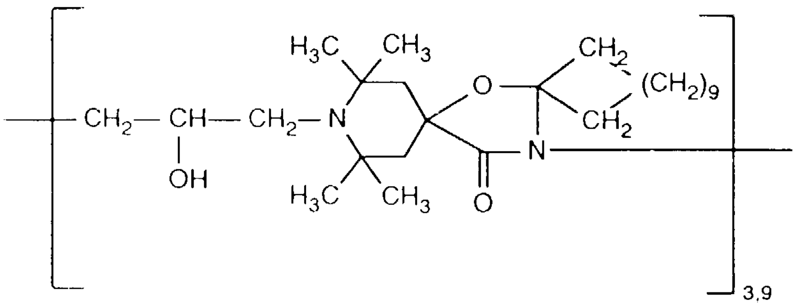

und

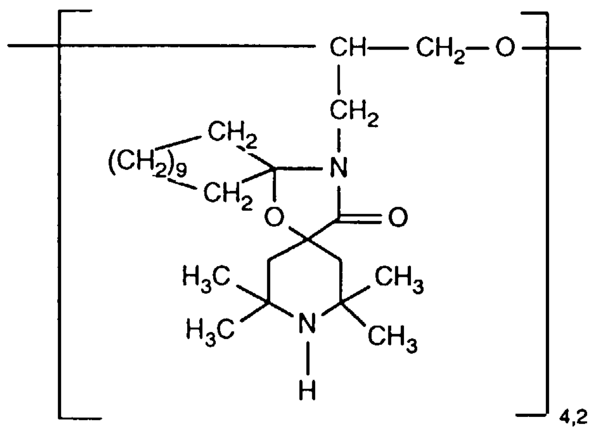

in einem Verhältnis von ca. 4:1.

*Verbindung D-1:*

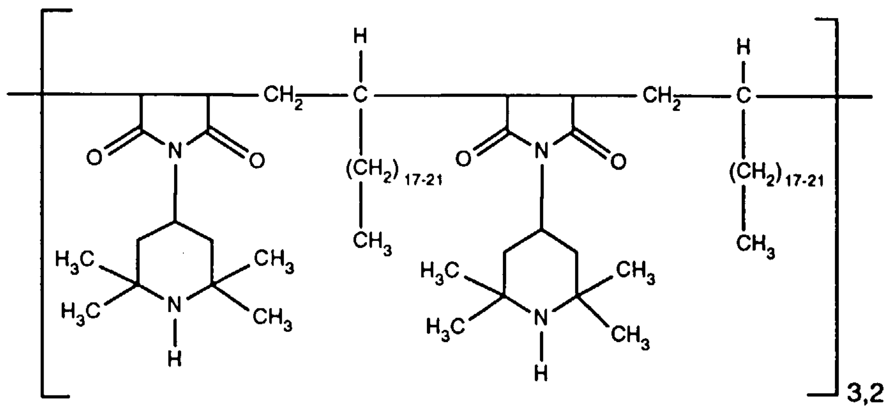

*Verbindung D-2:*

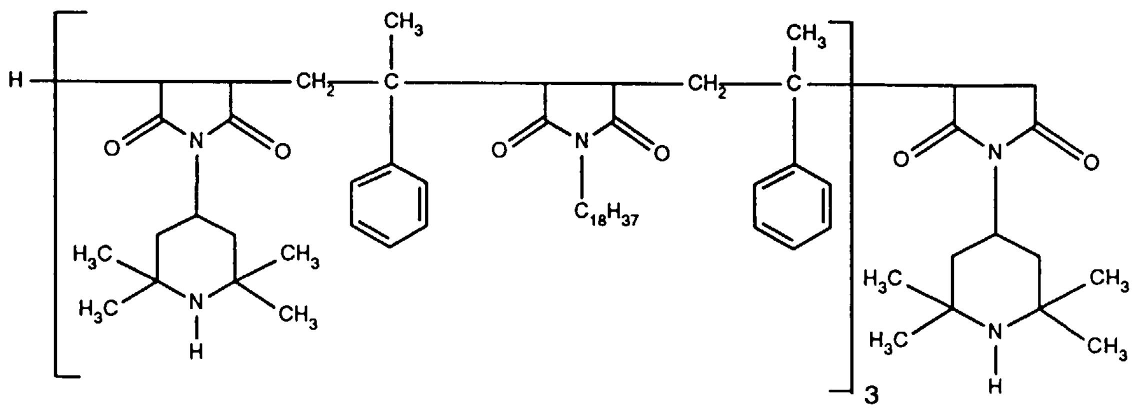

Verbindung E-1:

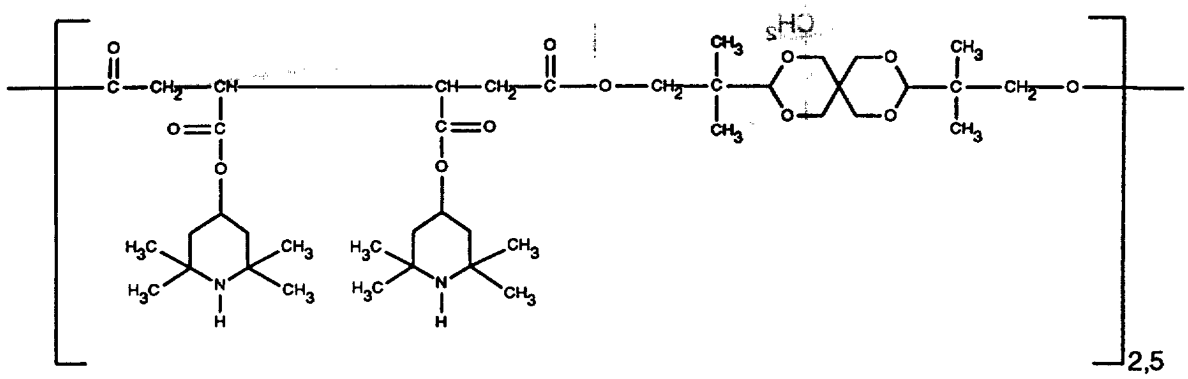

Verbindung E-2:

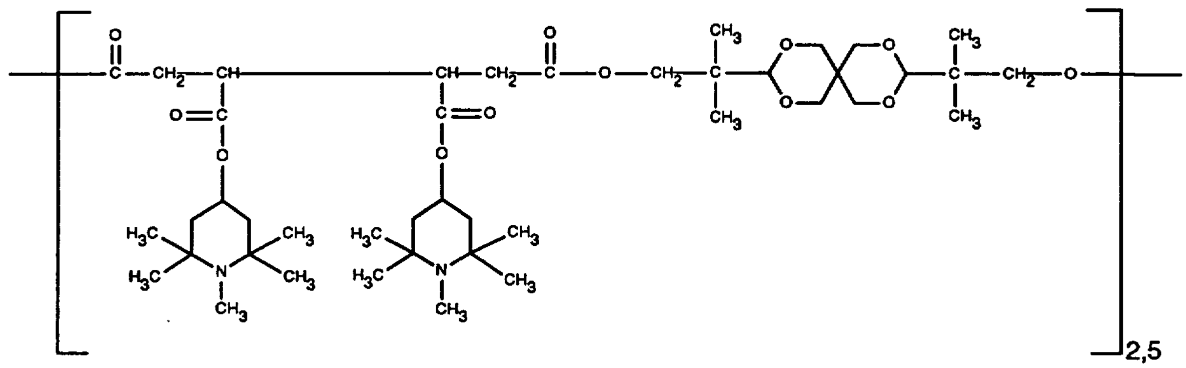

Beispiel 1: Lichtschutzwirkung in Polypropylen-Blockcopolymer-Folien.

100 Teile Polypropylen-Bockcopolymer-Pulver werden mit 0,05 Teilen Pentaerythrityltetrakis[3-(3,5-di-tert-butyl-4-hydroxyphenyl)propionat], 0,10 Teilen Tris[2,4-di-tert-butylphenyl]phosphit, 0,1 Teilen Ca-Stearat und den in der Tabelle 1 angegebenen Teilen Lichtschutzmittel im Brabenderplastographen bei 200°C während 10 Minuten homogenisiert. Die so erhaltene Masse wird möglichst rasch dem Kneter entnommen und in einer Kniehebelpresse zu einer 2-3 mm dicken Platte gepresst. Ein Teil des erhaltenen Rohpresslings wird ausgeschnitten und zwischen zwei Hochglanz-Hartaluminiumfolien mit einer hydraulischen Laborpresse während 6 Minuten bei 260°C zu einer 0,5 mm dicken Folie gepresst, die unverzüglich in einer wassergekühlten Presse abgekühlt wird. Aus dieser 0,5 mm dicken Folie werden nun Abschnitte von je 60 mm x 25 mm gestanzt und in einem WEATHER-OMETER Ci 65 (Schwarztafeltemperatur 63° +/- 2°C, keine Beregnung) belichtet. In regelmässigen Zeitabständen werden diese Prüflinge aus dem Belichtungsapparat entnommen und in einem IR-Spektrophotometer auf ihren Carbonylgehalt geprüft. Die Zunahme der Carbonylextinktion bei der Belichtung ist ein Mass für den photooxidativen Abbau des Polymeren und ist erfahrungsgemäss mit einem Abfall der mechanischen Eigenschaften verbunden.

Die Zeit ($T_{0,2\ gemessen}$) bis zum Erreichen einer Carbonylextinktion von 0,2 wird in Tabelle 1 angegeben.

Der synergistische Effekt wird durch einen Vergleich der berechneten mit den gemessenen $T_{0,2}$-Werten bestimmt. Die $T_{0,2}$- Werte werden nach dem Additivitätsgesetz (B. Ranby and J.F. Rabek, Photodegradation, Photo-oxidation and Photostabilization of Polymers, Principles and Applications, a Wiley-Interscience Publication, 1975, Seiten 418-422) nach folgender Gleichung berechnet:

$$T_{0,2\ berechnet} = \frac{T_{0,2}\text{-Lichtschutzmittel 1} + T_{0,2}\text{-Lichtschutzmittel 2}}{2}$$

Es liegt ein synergistischer Effekt für das betreffende Gemisch vor, wenn $T_{0,2\ gemessen} > T_{0,2\ berechnet}$ ist.

$T_{0,2\ berechnet}$ wird ebenfalls in Tabelle 1 angegeben.

Tabelle 1:

| Lichtschutzwirkung in Polypropylen-Blockcopolymer-Folien. | | |
|---|---|---|
| Lichtschutzwirkung | $T_{0,2\ gemessen}$ in Stunden | $T_{0,2\ berechnet}$ in Stunden |
| Kontrolle | 110 | |
| 0,20 % Verbindung A-1 | 1740 | |
| 0,20 % Verbindung A-2 | 2280 | |
| 0,20 % Verbindung B | 2400 | |
| 0,20 % Verbindung C | 1710 | |
| 0,20 % Verbindung D-1 | 505 | |
| 0,20 % Verbindung D-2 | 260 | |
| 0,20 % Verbindung E-1 | 1230 | |
| 0,20 % Verbindung E-2 | 1410 | |
| 0,1 % Verbindung A-1 und 0,1 % Verbindung D-1 | 1360 | 1122 |
| 0,1 % Verbindung A-1 und 0,1 % Verbindung D-2 | 1160 | 1000 |
| 0,1 % Verbindung A-1 und 0,1 % Verbindung E-1 | 1660 | 1485 |
| 0,1 % Verbindung A-1 und 0,1 % Verbindung E-2 | 1810 | 1575 |
| 0,1 % Verbindung A-2 und 0,1 % Verbindung D-1 | 1630 | 1392 |
| 0,1 % Verbindung A-2 und 0,1 % Verbindung D-2 | 1310 | 1270 |
| 0,1 % Verbindung A-2 und 0,1 % Verbindung E-1 | 1940 | 1755 |
| 0,1 % Verbindung A-2 und 0,1 % Verbindung E-2 | 2010 | 1845 |

Tabelle 1: (fortgesetzt)

| Lichtschutzwirkung in Polypropylen-Blockcopolymer-Folien. | | |
|---|---|---|
| Lichtschutzwirkung | $T_{0,2\ gemessen}$ in Stunden | $T_{0,2\ berechnet}$ in Stunden |
| 0,1 % Verbindung B und 0,1 % Verbindung E-1 | 1890 | 1815 |
| 0,1 % Verbindung B und 0,1 % Verbindung E-2 | 2180 | 1905 |
| 0,1 % Verbindung C und 0,1 % Verbindung D-1 | 1410 | 1107 |
| 0,1 % Verbindung C und 0,1 % Verbindung D-2 | 1230 | 985 |
| 0,1 % Verbindung C und 0,1 % Verbindung E-1 | 1680 | 1470 |
| 0,1 % Verbindung C und 0,1 % Verbindung E-2 | 1710 | 1560 |
| 0,1 % Verbindung D-1 und 0,1 % Verbindung D-2 | 415 | 382 |
| 0,1 % Verbindung D-1 und 0,1 % Verbindung E-1 | 1200 | 867 |
| 0,1 % Verbindung D-1 und 0,1 % Verbindung E-2 | 1320 | 957 |
| 0,1 % Verbindung D-2 und 0,1 % Verbindung E-2 | 1070 | 835 |
| 0,1 % Verbindung E-1 und 0,1 % Verbindung E-2 | 1360 | 1320 |

Beispiel 2: Lichtschutzwirkung in Folien aus Polyethylen niederer Dichte.

100 Teile Polyethylen niederer Dichte (PE-LD-Pulver; Dichte = 0,918 g/cm$^3$) werden mit 0,03 Teilen Octadecyl-3-(3,5-di-tert-butyl-4-hydroxyphenyl)propionat und den in der Tabelle 2 angegebenen Teilen Lichtschutzmittel im Brabenderplastographen bei 180°C während 10 Minuten homogenisiert. Die so erhaltene Masse wird möglichst rasch dem Kneter entnommen und in einer Presse zu einer 2-3 mm dicken Platte gepresst. Ein Teil des erhaltenen Rohpresslings wird ausgeschnitten und zwischen zwei Hochglanz-Hartaluminiumfolien mit einer hydraulischen Laborpresse während 6 Minuten bei 170°C zu einer 0,2 mm dicken Folie gepresst, die unverzüglich in einer wassergekühlten Presse abgekühlt wird. Aus dieser 0,2 mm Folie werden nun Abschnitte von je 60 mm x 25 mm gestanzt und einmal jede Woche während 16 Stunden über rauchende Salzsäure gehängt. Dies wird als Simulation des Effekts von halogenhaltigen Verbindungen wie z.B. gewissen Pestiziden oder Flammschutzmitteln angesehen. Anschliessend werden die Proben in einem WEATHER-OMETER Ci 65 (Schwarztafeltemperatur 63° +/- 2°C, keine Beregnung) belichtet. In regelmässigen Zeitabständen werden diese Prüflinge aus dem Belichtungsapparat entnommen und in einem IR-Spektrophotometer auf ihren Carbonylgehalt geprüft. Die Zunahme der Carbonylextinktion bei der Belichtung ist ein Mass für den photooxidativen Abbau des Polymeren und ist erfahrungsgemäss mit einem Abfall der mechanischen Eigenschaften verbunden.

Die Zeit ($T_{0,2\ gemessen}$) bis zum Erreichen einer Carbonylextinktion von 0,2 wird in Tabelle 2 angegeben.

Der synergistische Effekt wird durch einen Vergleich der berechneten mit den gemessenen $T_{0,2}$-Werten in Analogie zu Beispiel 1 bestimmt.

Tabelle 2:

| Lichtschutzwirkung in Folien aus Polyethylene niederer Dichte | | |
|---|---|---|
| Lichtschutzwirkung | $T_{0,2\ gemessen}$ in Stunden | $T_{0,2\ berechnet}$ in Stunden |
| Kontrolle | 200 | |
| 0,30 % Verbindung A-1 | 300 | |
| 0,30 % Verbindung A-2 | 247 | |
| 0,30 % Verbindung B | 245 | |
| 0,30 % Verbindung C | 340 | |
| 0,30 % Verbindung D-1 | 420 | |
| 0,30 % Verbindung D-2 | 370 | |
| 0,30 % Verbindung E-1 | 167 | |
| 0,30 % Verbindung E-2 | 207 | |
| 0,15 % Verbindung A-1 und 0,15 % Verbindung D-2 | 355 | 335 |
| 0,15 % Verbindung A-1 und 0,15 % Verbindung E-1 | 405 | 233 |
| 0,15 % Verbindung A-1 und 0,15 % Verbindung E-2 | 350 | 253 |
| 0,15 % Verbindung A-2 und 0,15 % Verbindung D-1 | 385 | 333 |
| 0,15 % Verbindung A-2 und 0,1 % Verbindung E-1 | 390 | 207 |
| 0,15 % Verbindung A-2 und 0,15 % Verbindung E-2 | 275 | 227 |
| 0,15 % Verbindung B und 0,15 % Verbindung D-1 | 420 | 332 |
| 0,15 % Verbindung B und 0,15 % Verbindung E-1 | 320 | 206 |
| 0,15 % Verbindung B und 0,15 % Verbindung E-2 | 280 | 226 |
| 0,15 % Verbindung C und | 420 | 380 |

Tabelle 2: (fortgesetzt)

| Lichtschutzwirkung in Folien aus Polyethylene niederer Dichte | | |
|---|---|---|
| Lichtschutzwirkung | $T_{0,2\ gemessen}$ in Stunden | $T_{0,2\ berechnet}$ in Stunden |
| 0,15 % Verbindung D-1 | | |
| 0,15 % Verbindung C und 0,15 % Verbindung D-2 | 415 | 355 |
| 0,15 % Verbindung C und 0,1 % Verbindung E-1 | 450 | 253 |
| 0,15 % Verbindung C und 0,15 % Verbindung E-2 | 360 | 273 |
| 0,15 % Verbindung D-1 und 0,15 % Verbindung D-2 | 435 | 395 |
| 0,15 % Verbindung D-1 und 0,15 % Verbindung E-1 | 530 | 293 |
| 0,15 % Verbindung D-1 und 0,15 % Verbindung E-2 | 395 | 313 |
| 0,15 % Verbindung D-2 und 0,15 % Verbindung E-1 | 410 | 268 |
| 0,15 % Verbindung D-2 und 0,15 % Verbindung E-2 | 355 | 298 |

**Patentansprüche**

**1.** Stabilisatorgemisch enthaltend eine Komponente a), b) oder c) und eine Komponente d) oder e), wobei

die Komponente a) mindestens eine Verbindung der Formel I ist,

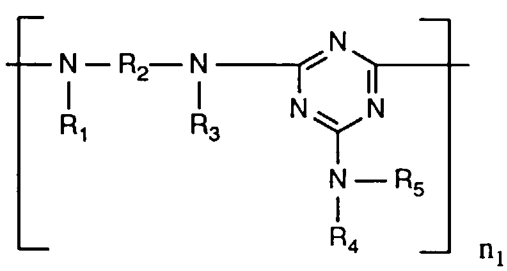

(I)

worin $R_1$, $R_3$, $R_4$ und $R_5$ unabhängig voneinander Wasserstoff, $C_1$-$C_{12}$-Alkyl, $C_5$-$C_{12}$-Cycloalkyl, durch $C_1$-$C_4$-Alkyl substituiertes $C_5$-$C_{12}$-Cycloalkyl, Phenyl, durch -OH und/oder $C_1$-$C_{10}$Alkyl substituiertes Phenyl, $C_7$-$C_9$-Phenylalkyl, am Phenylrest durch -OH und/oder $C_1$-$C_{10}$-Alkyl substituiertes $C_7$-$C_9$-Phenylalkyl oder eine Gruppe der Formel II bedeuten,

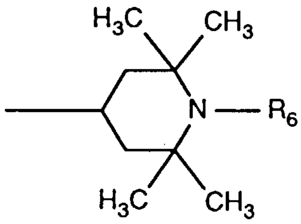

(II)

$R_2$ $C_2$-$C_{18}$-Alkylen, $C_5$-$C_7$-Cycloalkylen oder $C_1$-$C_4$-Alkylendi($C_5$-$C_7$-cycloalkylen) ist oder die Reste $R_1$, $R_2$ und $R_3$ zusammen mit den Stickstoffatomen, an die sie gebunden sind, einen 5- bis 10-gliedrigen heterocyclischen Ring bilden oder

$R_4$ und $R_5$ zusammen mit dem Stickstoffatom, an das sie gebunden sind, einen 5- bis 10-gliedrigen heterocyclischen Ring bilden,

$R_6$ Wasserstoff, $C_1$-$C_8$-Alkyl, O·,-$CH_2CN$, $C_3$-$C_6$-Alkenyl, $C_7$-$C_9$-Phenylalkyl, am Phenylrest durch $C_1$-$C_4$-Alkyl substituiertes $C_7$-$C_9$-Phenylalkyl oder $C_1$-$C_8$-Acyl ist,

$n_1$ eine Zahl von 2 bis 50 ist und

mindestens einer der Reste $R_1$, $R_3$, $R_4$ und $R_5$ eine Gruppe der Formel II darstellt;

die Komponente b) ein Produkt erhältlich durch Umsetzung eines durch Reaktion eines Polyamins der Formel IIIa mit Cyanursäurechlorid erhaltenen Produktes mit einer Verbindung der Formel IIIb bedeutet,

$$H_2N-(CH_2)_{n_2'}-NH-(CH_2)_{n_2''}-NH-(CH_2)_{n_2'''}-NH_2 \quad \text{(IIIa)}$$

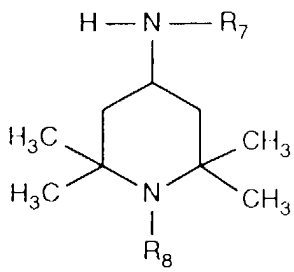

(IIIb)

worin $n_2'$, $n_2''$ und $n_2'''$ unabhängig voneinander eine Zahl von 2 bis 12 sind,

$R_7$ Wasserstoff, $C_1$-$C_{12}$-Alkyl, $C_5$-$C_{12}$-Cycloalkyl, Phenyl oder $C_7$-$C_9$-Phenylalkyl ist und

$R_8$ eine der für $R_6$ angegebenen Bedeutungen besitzt;

die Komponente c) mindestens eine Verbindung der Formeln IVa und IVb ist,

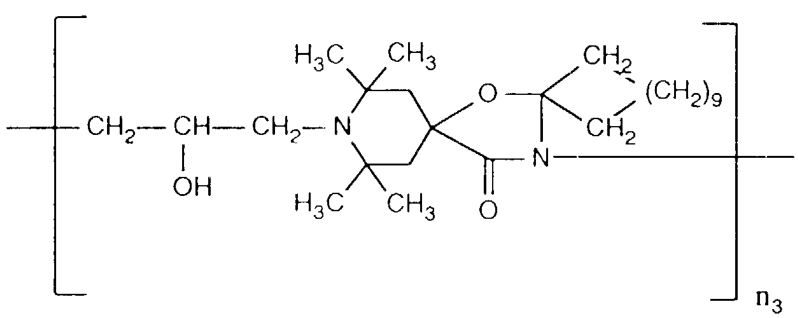

(IVa)

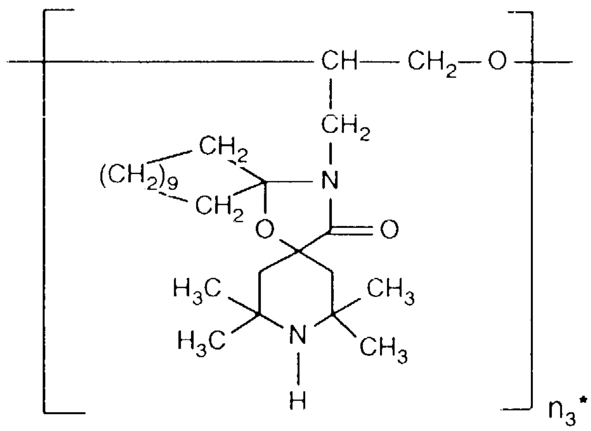

(IVb)

worin $n_3$ und $n_3$* unabhängig voneinander eine Zahl von 2 bis 50 sind;
die Komponente d) mindestens eine Verbindung der Formel V ist,

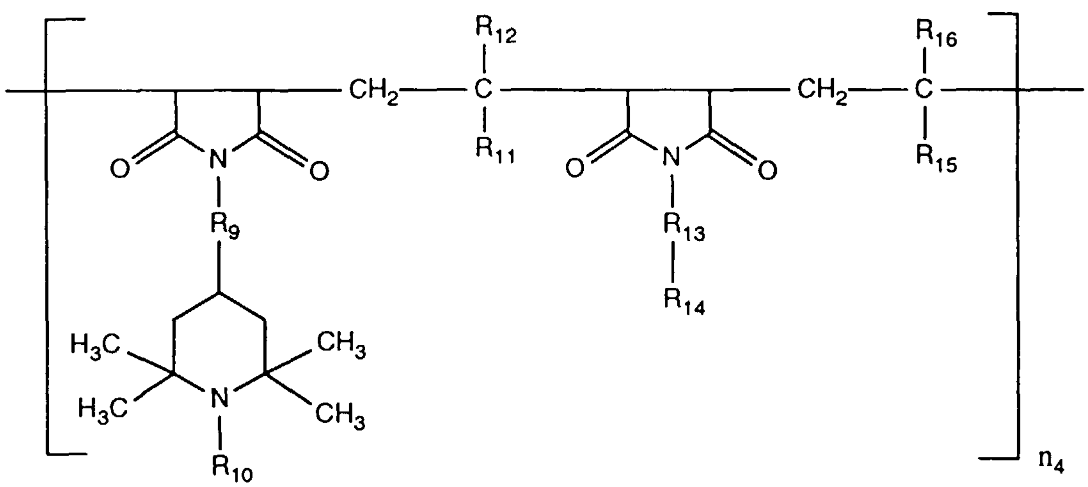

(V)

worin $R_9$ und $R_{13}$ unabhängig voneinander eine direkte Bindung oder eine Gruppe $-N(X_1)-CO-X_2-CO-N(X_3)-$ bedeuten, $X_1$ und $X_3$ unabhängig voneinander Wasserstoff, $C_1$-$C_8$-Alkyl, $C_5$-$C_{12}$-Cycloalkyl, Phenyl, $C_7$-$C_9$-Phenylalkyl oder eine Gruppe der Formel II sind,
$X_2$ eine direkte Bindung oder $C_1$-$C_4$-Alkylen darstellt,
$R_{10}$ eine der für $R_6$ angegebenen Bedeutungen besitzt,
$R_{11}$, $R_{12}$, $R_{15}$ und $R_{16}$ unabhängig voneinander Wasserstoff, $C_1$-$C_{30}$-Alkyl, $C_5$-$C_{12}$-Cycloalkyl oder Phenyl bedeuten,
$R_{14}$ Wasserstoff, $C_1$-$C_{30}$-Alkyl, $C_5$-$C_{12}$-Cycloalkyl, $C_7$-$C_9$-Phenylalkyl, Phenyl oder eine Gruppe der Formel II darstellt und
$n_4$ eine Zahl von 1 bis 50 ist;

die Komponente e) mindestens eine Verbindung der Formel VI ist,

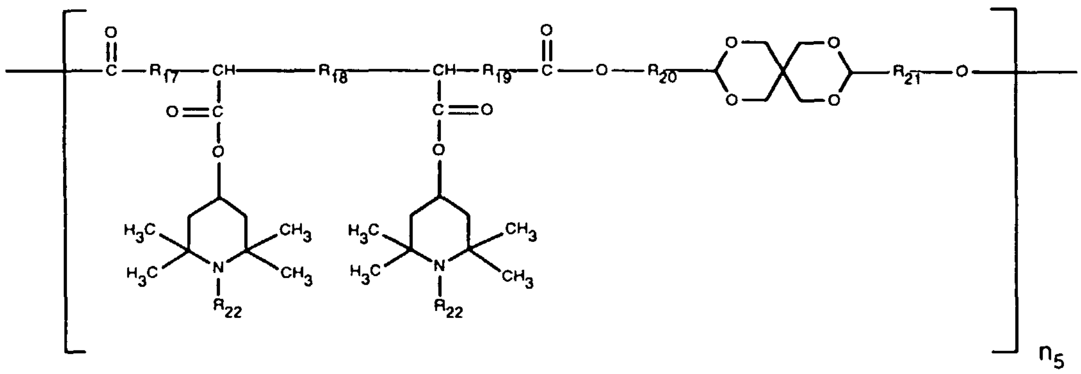

(VI)

worin $R_{17}$, $R_{18}$, $R_{19}$, $R_{20}$ und $R_{21}$ unabhängig voneinander eine direkte Bindung oder $C_1$-$C_{10}$-Alkylen sind, $R_{22}$ eine der für $R_6$ angegebenen Bedeutungen besitzt und $n_5$ eine Zahl von 1 bis 50 darstellt.

**2.** Stabilisatorgemisch gemäss Anspruch 1, worin $R_6$, $R_8$, $R_{10}$ und $R_{22}$ unabhängig voneinander Wasserstoff oder Methyl bedeuten.

**3.** Stabilisatorgemisch gemäss Anspruch 1, worin

$R_1$, $R_3$, $R_4$ und $R_5$ unabhängig voneinander Wasserstoff, $C_1$-$C_8$-Alkyl, $C_5$-$C_8$-Cycloalkyl, Phenyl, $C_7$-$C_9$-Phenylalkyl oder eine Gruppe der Formel II bedeuten oder
die Reste $R_4$ und $R_5$ zusammen mit dem Stickstoffatom, an das sie gebunden sind, einen 6-gliedrigen heterocyclischen Ring bilden
$R_2$ $C_2$-$C_{10}$-Alkylen ist und
$n_1$ eine Zahl von 2 bis 25 ist;
$n_2'$, $n_2''$ und $n_2'''$ unabhängig voneinander eine Zahl von 2 bis 4 sind und
$R_7$ $C_1$-$C_4$-Alkyl bedeutet;
$n_3$ und $n_3^*$ unabhängig voneinander eine Zahl von 2 bis 25 sind;
$R_9$ und $R_{13}$ eine direkte Bindung oder eine Gruppe -N($X_1$)-CO-$X_2$-CO-N($X_3$)- bedeuten,
$X_1$ und $X_3$ unabhängig voneinander Wasserstoff oder $C_1$-$C_4$-Alkyl sind, $X_2$ eine direkte Bindung ist,
$R_{11}$ und $R_{15}$ $C_1$-$C_{25}$-Alkyl oder Phenyl sind,
$R_2$ und $R_{16}$ Wasserstoff oder $C_1$-$C_4$-Alkyl bedeuten,
$R_{14}$ $C_1$-$C_{25}$-Alkyl oder eine Gruppe der Formel II ist und
$n_4$ eine Zahl von 1 bis 25 darstellt;
$R_{17}$, $R_{19}$, $R_{20}$ und $R_{21}$ $C_1$-$C_4$-Alkylen sind,
$R_{18}$ eine direkte Bindung ist und
$n_5$ eine Zahl von 1 bis 25 darstellt.

**4.** Stabilisatorgemisch gemäss Anspruch 1, worin die Komponente a) mindestens eine Verbindung der Formel (I-a), (I-b) oder (I-c) ist,

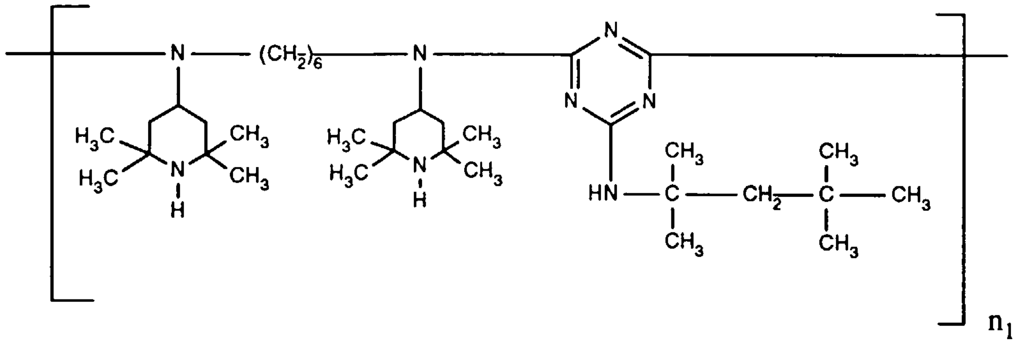

(I-a)

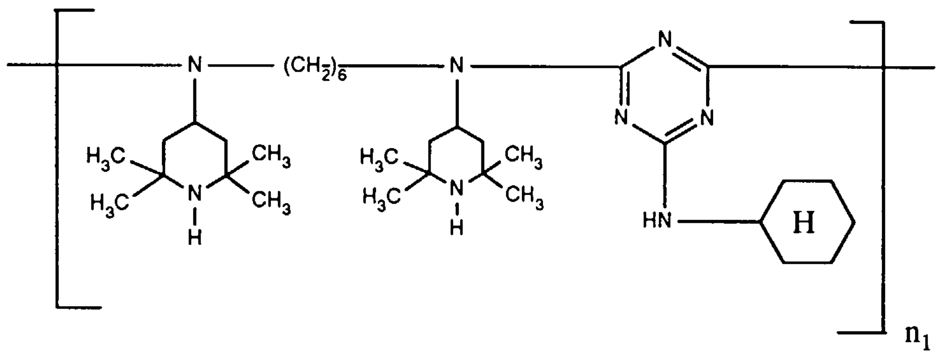

(I-b)

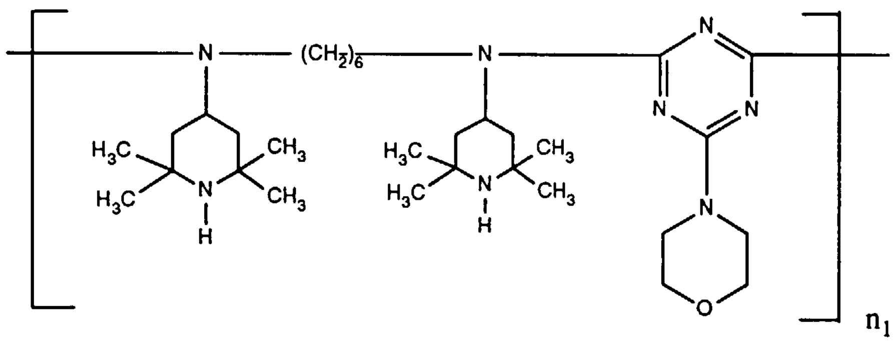

(I-c)

worin $n_1$ eine Zahl von 2 bis 20 bedeutet;
die Komponente b) ein Produkt erhältlich durch Umsetzung eines durch Reaktion eines Polyamins der Formel

$$H_2N-(CH_2)_3-NH-(CH_2)_2-NH-(CH_2)_3-NH_2$$

mit Cyanursäurechlorid erhaltenen Produktes mit einer Verbindung der Formel

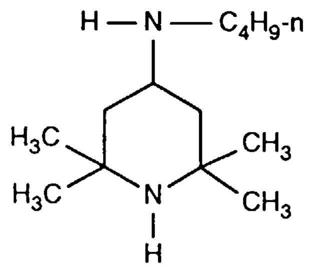

bedeutet;

in der Komponenten c) $n_3$ und $n_3$* unabhängig voneinander eine Zahl von 2 bis 20 sind; die Komponente d) mindestens eine Verbindung der Formel (V-a), (V-b) oder (V-c) ist,

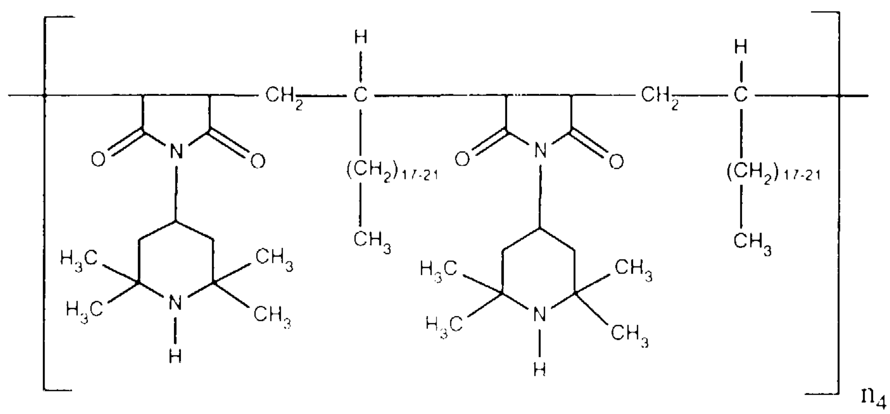

(V-a)

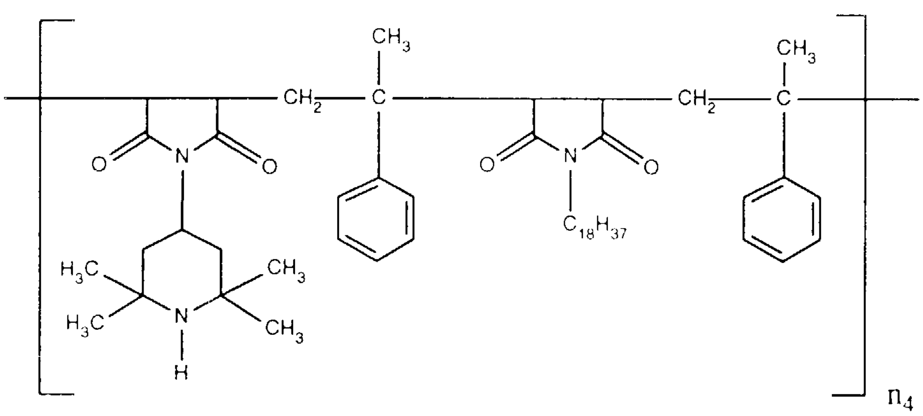

(V-b)

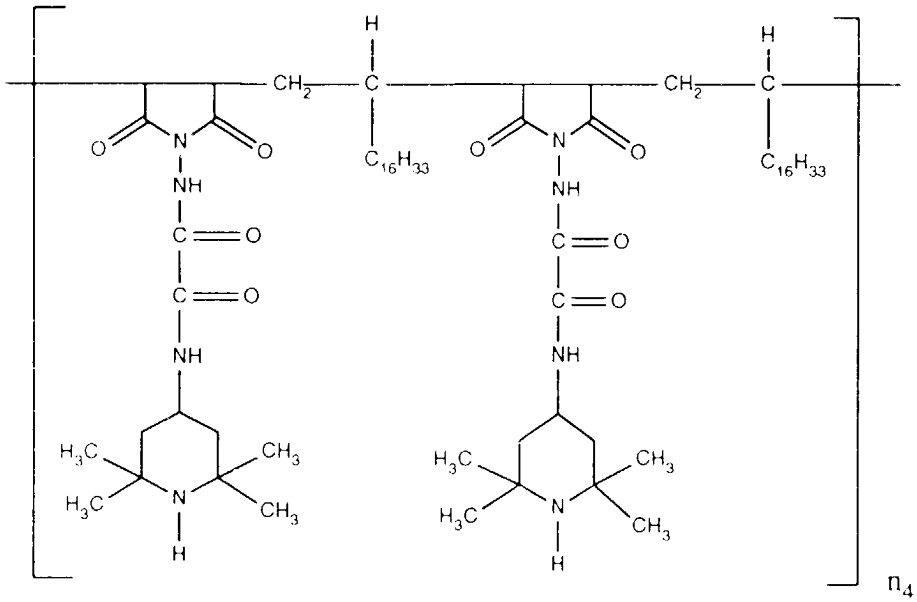

(V-c)

worin $n_4$ eine Zahl von 1 bis 20 ist;
die Komponente e) mindestens eine Verbindung der Formal VI-a ist,

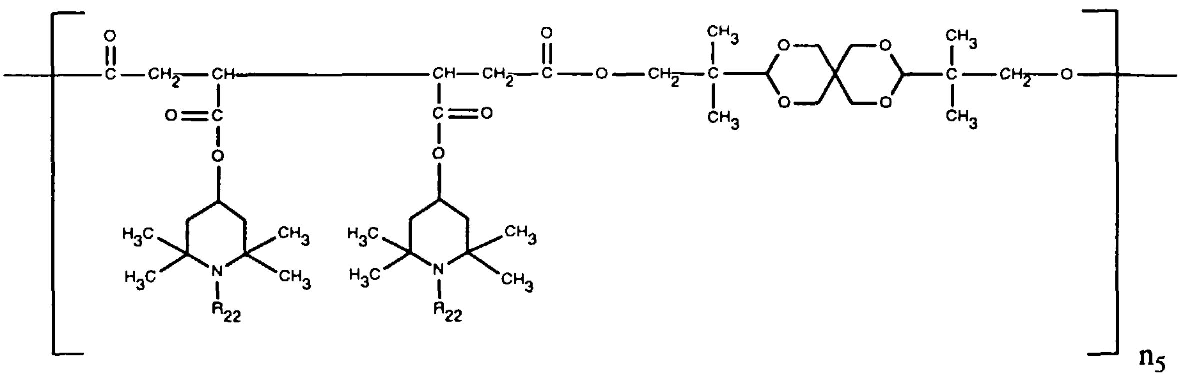

(VI-a)

worin $R_{22}$ Wasserstoff oder Methyl bedeutet und $n_5$ eine Zahl von 1 bis 20 ist.

**5.** Stabilisatorgemisch gemäss Anspruch 1, enthaltend die Komponenten a) und d).

**6.** Stabilisatorgemisch gemäss Anspruch 1, enthaltend die Komponenten a) und e).

**7.** Stabilisatorgemisch gemäss Anspruch 1, enthaltend die Komponenten b) und d).

**8.** Stabilisatorgemisch gemäss Anspruch 1, enthaltend die Komponenten b) und e).

**9.** Stabilisatorgemisch gemäss Anspruch 1, enthaltend die Komponenten c) und d).

**10.** Stabilisatorgemisch gemäss Anspruch 1, enthaltend die Komponenten c) und e).

**11.** Stabilisatorgemisch enthaltend unabhängig voneinander 2 Verbindungen ausgo vählt aus den im Anspruch 1 definierten Komponenten d) und e) mit der Bedingung, dass diese Verbindungen nicht gleich sein dürfen.

**12.** Stabilisatorgemisch enthaltend unabhängig voneinander 2 Komponenten ausgewählt aus der Gruppe bestehend

aus den Komponenten d-1), d-2), d-3), e-1) und e-2), wobei die Komponenten verschieden sind und die Komponente d-1) mindestens eine Verbindung der Formel V-a, die Komponente d-2) mindestens eine Verbindung der Formel V-b, die Komponente d-3) mindestens eine Verbindung der Formel V-c, die Komponente e-1) mindestens eine Verbindung der Formel VI-a, worin $R_{22}$ Wasserstoff bedeutet, und die Komponente e-2) mindestens eine Verbindung der Formel VI-a, worin $R_{22}$ Methyl ist, bedeuten und die Formeln V-a, V-b, V-c und VI-a die im Anspruch 4 angegebenen Definitionen besitzen.

**13.** Zusammensetzung enthaltend ein gegen oxidativen, thermischen oder lichtinduzierten Abbau empfindliches organisches Material und ein Stabilisatorgemisch gemäss Anspruch 1.

**14.** Zusammensetzung gemäss Anspruch 13, worin das organische Material ein Polyolefin ist.

**15.** Zusammensetzung gemäss Anspruch 13, worin das organische Material Polyethylen, Polypropylen oder ein Copolymer von Polyethylen oder Polypropylen ist.

**16.** Verfahren zum Stabilisieren eines organischen Materials gegen oxidativen, thermischen oder lichtinduzierten Abbau, dadurch gekennzeichnet, dass in das organische Material ein Stabilisatorgemisch gemäss Anspruch 1 eingearbeitet wird.

**17.** Zusammensetzung enthaltend ein gegen oxidativen, thermischen oder lichtinduzierten Abbau empfindliches organisches Material und ein Stabilisatorgemisch gemäss Anspruch 11.

## Claims

**1.** A stabilizer mixture comprising a component a), b) or c) and a component d) or e) where

component a) is at least one compound of the formula I

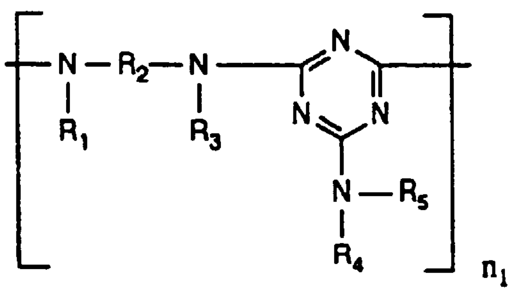

(I)

in which $R_1$, $R_3$, $R_4$ and $R_5$, independently of one another, are hydrogen, $C_1$-$C_{12}$alkyl, $C_5$-$C_{12}$cycloalkyl, $C_1$-$C_4$alkyl-substituted $C_5$-$C_{12}$cycloalkyl, phenyl, phenyl which is substituted by -OH and/or $C_1$-$C_{10}$alkyl, $C_7$-$C_9$phenylalkyl, $C_7$-$C_9$phenylalkyl which is substituted on the phenyl radical by -OH and/or $C_1$-$C_{10}$alkyl, or a group of the formula II

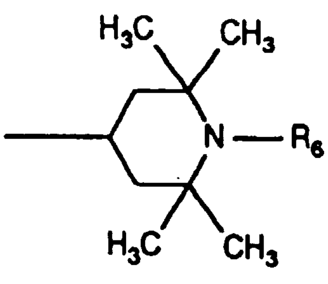

(II) ,

$R_2$ is $C_2$-$C_{18}$alkylene, $C_5$-$C_7$cycloalkylene or $C_1$-$C_4$alkylenedi($C_5$-$C_7$cycloalkylene), or the radicals $R_1$, $R_2$

and $R_3$, together with the nitrogen atoms to which they are bonded, form a 5-to 10-membered heterocyclic ring, or
$R_4$ and $R_5$, together with the nitrogen atom to which they are bonded, form a 5- to 10-membered heterocyclic ring,
$R_6$ is hydrogen, $C_1$-$C_8$alkyl, O, -$CH_2CN$, $C_3$-$C_6$alkenyl,
$C_7$-$C_9$phenylalkyl, $C_7$-$C_9$phenylalkyl which is substituted on the phenyl radical by $C_1$-$C_4$alkyl, or $C_1$-$C_8$acyl,
$n_1$ is a number from 2 to 50, and

at least one of the radicals $R_1$, $R_3$, $R_4$ and $R_5$ is a group of the formula II;

component b) is a product obtainable by reacting a product obtained by reaction of a polyamine of the formula IIIa with cyanuric chloride with a compound of the formula IIIb

$$H_2N-(CH_2)_{n_2'}-NH-(CH_2)_{n_2''}-NH-(CH_2)_{n_2'''}-NH_2 \quad \text{(IIIa)}$$

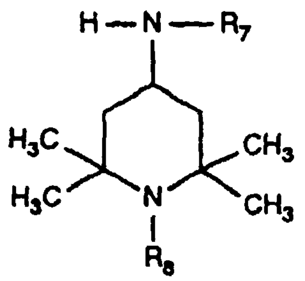

(IIIb)

in which $n_2'$, $n_2''$ and $n_2'''$, independently of one another, are a number from 2 to 12, $R_7$ is hydrogen, $C_1$-$C_{12}$alkyl, $C_5$-$C_{12}$cycloalkyl, phenyl or $C_7$-$C_9$phenylalkyl, and $R_8$ is as defined for $R_6$;

component c) is at least one compound of the formulae IVa and IVb

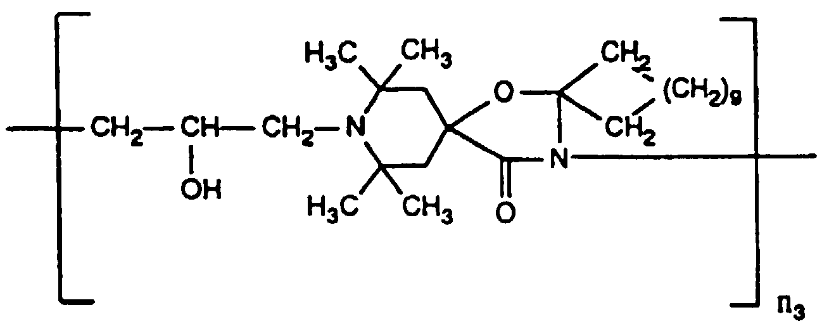

(IVa)

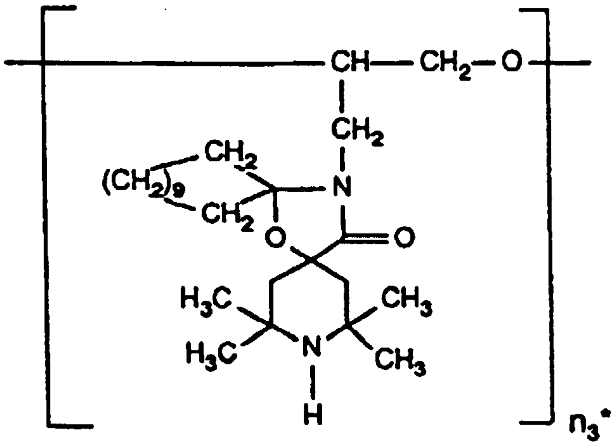

(IVb)

in which $n_3$ and $n_3$*, independently of one another, are a number from 2 to 50;

component d) is at least one compound of the formula V

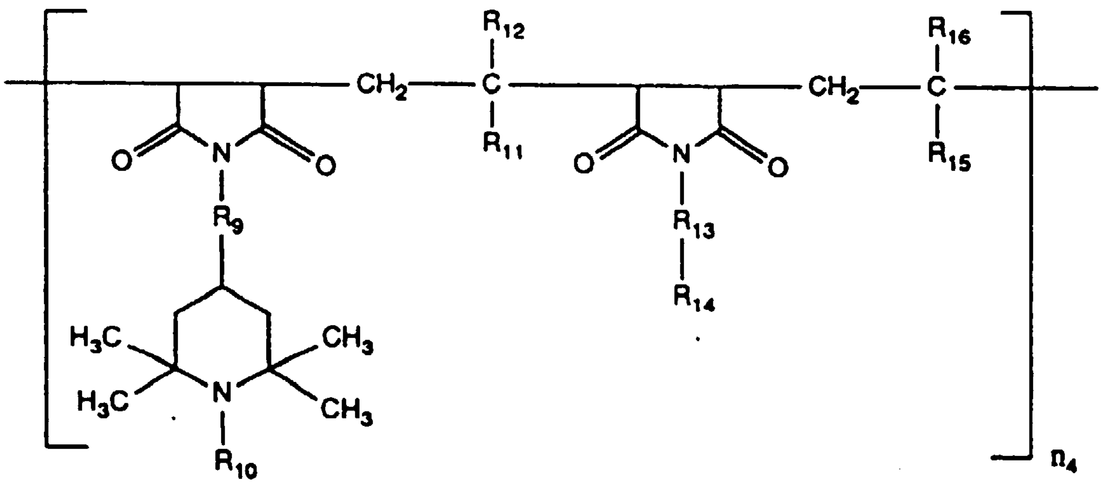

(V)

in which $R_9$ and $R_{13}$, independently of one another, are a direct bond or an $-N(X_1)-CO-X_2-CO-N(X_3)-$ group, where $X_1$ and $X_3$, independently of one another, are hydrogen, $C_1$-$C_8$alkyl, $C_5$-$C_{12}$cycloalkyl, phenyl, $C_7$-$C_9$phenylalkyl or a group of the formula II,

$X_2$ is a direct bond or $C_1$-$C_4$alkylene,
$R_{10}$ is as defined for $R_6$,
$R_{11}$, $R_{12}$, $R_{15}$ and $R_{16}$, independently of one another, are hydrogen, $C_1$-$C_{30}$alkyl, $C_5$-$C_{12}$cycloalkyl or phenyl,
$R_{14}$ is hydrogen, $C_1$-$C_{30}$alkyl, $C_5$-$C_{12}$cycloalkyl, $C_7$-$C_9$phenylalkyl, phenyl or a group of the formula II, and
$n_4$ is a number from 1 to 50;

component e) is at least one compound of the formula VI

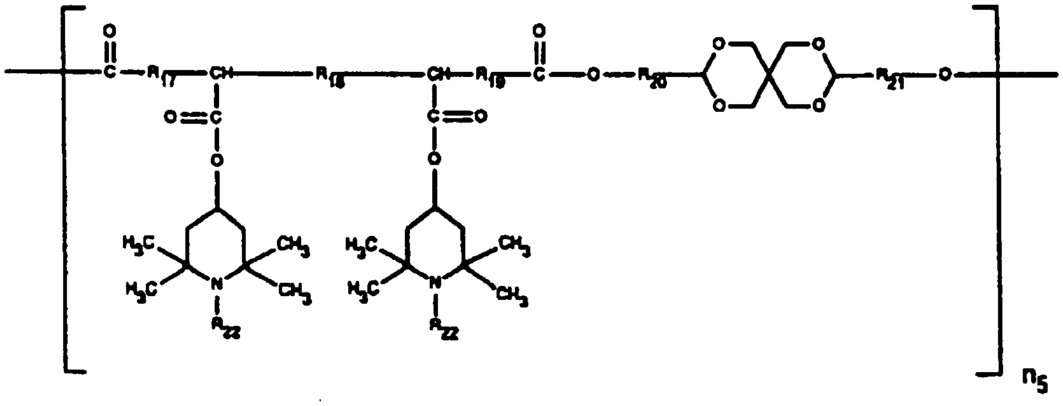

(VI)

in which $R_{17}$, $R_{18}$, $R_{19}$, $R_{20}$ and $R_{21}$, independently of one another, are a direct bond or $C_1$-$C_{10}$alkylene,

$R_{22}$ is as defined for $R_6$, and
$n_5$ is a number from 1 to 50.

**2.** A stabilizer mixture according to claim 1, in which $R_6$, $R_8$, $R_{10}$ and $R_{22}$, independently of one another, are hydrogen or methyl.

**3.** A stabilizer mixture according to claim 1, in which $R_1$, $R_3$, $R_4$ and $R_5$, independently of one another, are hydrogen, $C_1$-$C_8$alkyl, $C_5$-$C_8$cycloalkyl, phenyl, $C_7$-$C_9$phenylalkyl or a group of the formula II, or the radical $R_4$ and $R_5$, together with the nitrogen atom to which they are bonded, form a 6-membered heterocyclic ring, $R_2$ is $C_2$-$C_{10}$alkylene, and

$n_1$ is a number from 2 to 25;
$n_2'$, $n_2''$ and $n_2'''$, independently of one another, are a number from 2 to 4, and
$R_7$ is $C_1$-$C_4$alkyl;
$n_3$ and $n_3^*$, independently of one another are a number from 2 to 25;
$R_9$ and $R_{13}$ are a direct bond or an -N($X_1$)-CO-$X_2$-CO-N($X_3$)-group,
$X_1$ and $X_3$, independently of one another, are hydrogen or $C_1$-$C_4$alkyl, $X_2$ is a direct bond,
$R_{11}$ and $R_{15}$ are $C_1$-$C_{25}$alkyl or phenyl,
$R_{12}$ and $R_{16}$ are hydrogen or $C_1$-$C_4$alkyl,
$R_{14}$ is $C_1$-$C_{25}$alkyl or a group of the formula II, and
$n_4$ is a number from 1 to 25;
$R_{17}$, $R_{19}$, $R_{20}$ and $R_{21}$ are $C_1$-$C_4$alkylene,
$R_8$ is a direct bond, and
$n_5$ is a number from 1 to 25.

**4.** A stabilizer mixture according to claim 1, in which component a) is at least one compound of the formula (I-a), (I-b) or (I-c)

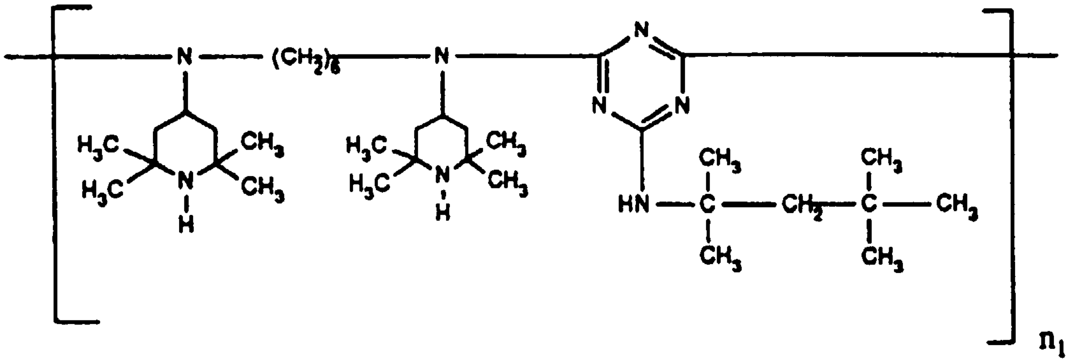

(I-a)

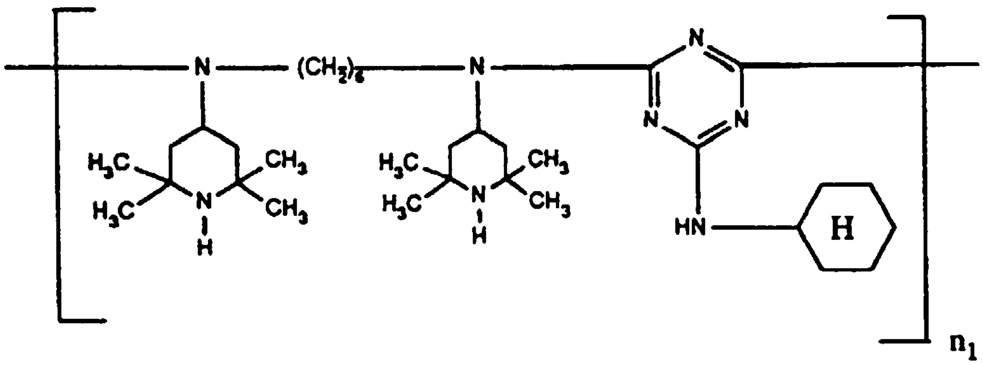

(I-b)

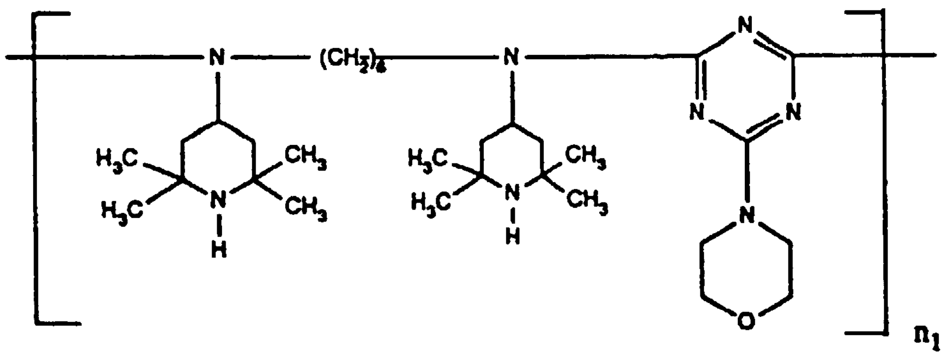

(I-c)

in which $n_1$ is a number 2 to 20;

component b) is a product obtainable by reacting a product obtained by reaction of a polyamine of the formula

$$H_2N-(CH_2)_3-NH-(CH_2)_2-NH-(CH_2)_3-NH_2$$

with cyanuric chloride with a compound of the formula

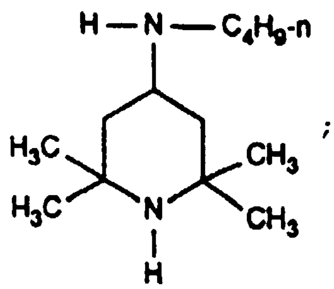

$n_3$ and $n_3$* in component c) are, independently of one another, a number from 2 to 20; component d) is at least one compound of the formula (V-a), (V-b) or (V-c)

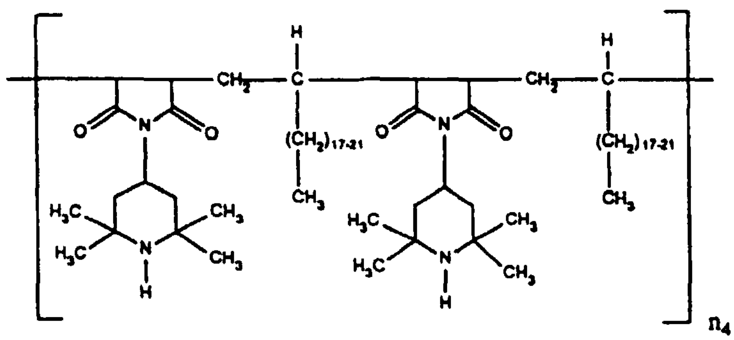

(V-a)

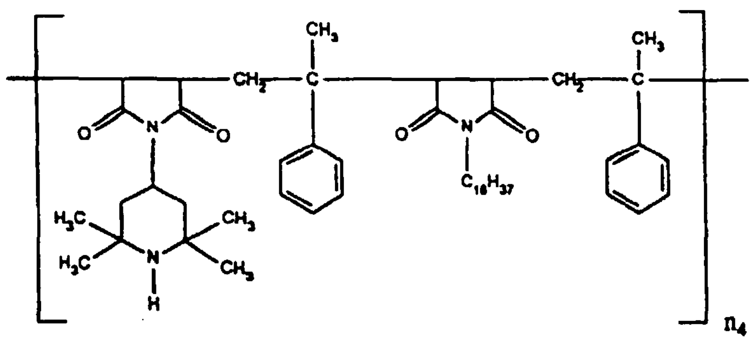

(V-b)

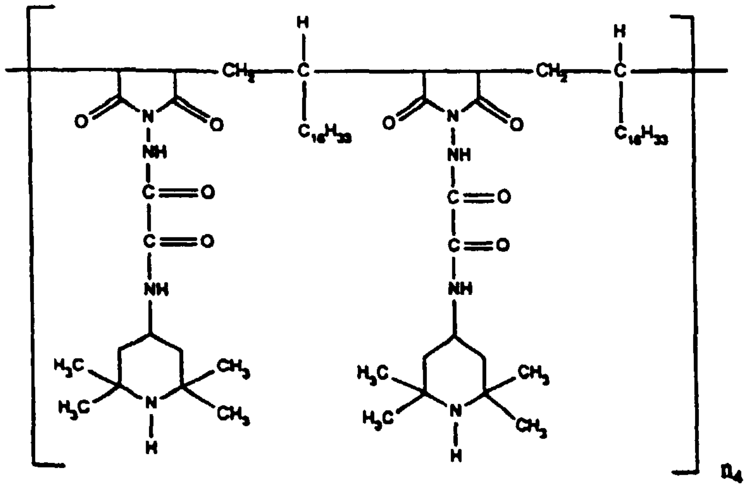

(V-c)

in which $n_4$ is a number from 1 to 20;
component e) is at least one compound of the formula VI-a

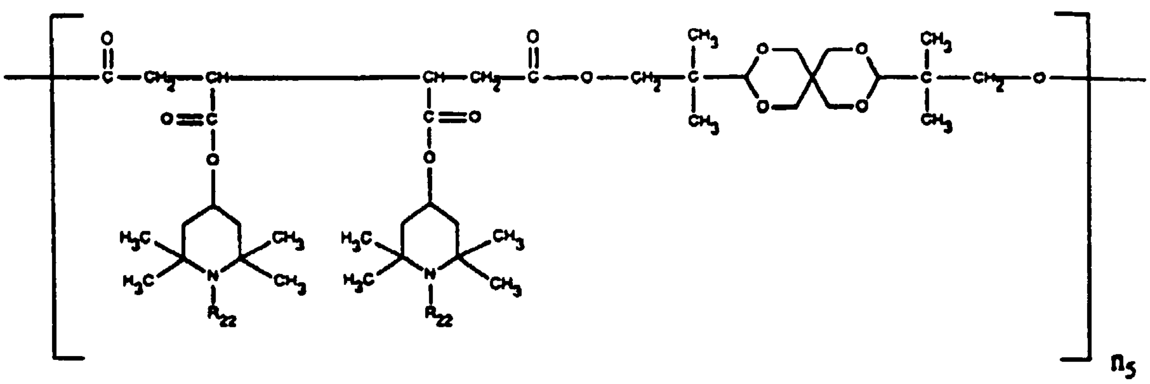

(VI-a)

in which $R_{22}$ is hydrogen or methyl, and $n_5$ is a number from 1 to 20.

**5.** A stabilizer mixture according to claim 1, which comprises components a) and d).

**6.** A stabilizer mixture according to claim 1, which comprises components a) and e).

**7.** A stabilizer mixture according to claim 1, which comprises components b) and d).

**8.** A stabilizer mixture according to claim 1, which comprises components b) and e).

**9.** A stabilizer mixture acording to claim 1, which comprises components c) and d).

**10.** A stabilizer mixture according to claim 1, which comprises components c) and e).

**11.** A stabilizer mixture comprising, independently of one another, 2 compounds selected from components d) and e) defined in claim 1, with the proviso that these compounds must not be identical.

**12.** A stabilizer mixture comprising, independently of one another, two components selected from the group consisting of components d-1), d-2), d-3), e-1) and e-2), where the components are different and component d-1) is at least one compound of the formula V-a, component d-2) is at least one compund of the formula V-b, component d-3) is

at least one compund of the formula V-c, component e-1) is at least one compound of the formula VI-a in which $R_{22}$ is hydrogen, and component e-2) is at least one compound of the formula VI-a in which $R_{22}$ is methyl, and the formulae VI-a, V-b, V-c and VI-a are as defined in claim 4.

**13.** A composition comprising an organic material which is sensitive to oxidative, thermal or photoinduced degradation and a stabilizer mixture according to claim 1.

**14.** A composition according to claim 13, in which the organic material is a polyolefin.

**15.** A composition according to claim 13, in which the organic material is polyethylene, polypropylene or a copolymer of polyethylene or polypropylene.

**16.** A process for stabilizing an organic material against oxidative, thermal or photoinduced degradation, which comprises incorporating a stabilizer mixture according to claim 1 into the organic material.

**17.** A composition comprising an organic material which is sensitive to oxidative, thermal or photoinduced degradation and a stabilizer mixture according to claim 11.

## Revendications

**1.** Mélange de stabilisants contenant un composant a), b) ou c) et un composant d) ou e), dans lequel

le composant a) est au moins un composé de formule I

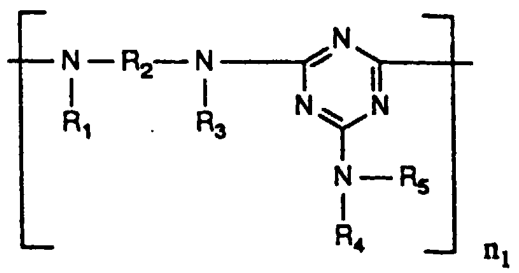

(I)

dans laquelle

$R_1$, $R_3$, $R_4$ et $R_5$ représentent indépendamment les uns des autres un atome d'hydrogène, un groupe alkyle en $C_5$ à $C_{12}$, cycloalkyle en $C_5$ à $C_{12}$, cycloalkyle en $C_5$ à $C_{12}$ substitué par un groupe alkyle en $C_1$ à $C_4$, phényle, phényle substitué par un groupe -OH et/ou alkyle en $C_1$ à $C_{10}$, phénylalkyle en $C_7$ à $C_9$, phénylalkyle en $C_7$ à $C_9$ substitué sur le groupe phényle par un groupe -OH et/ou alkyle en $C_1$ à $C_{10}$ ou un groupe de formule II

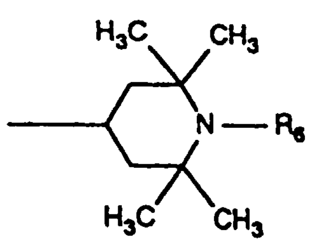

(II)

$R_2$ représente un groupe alkylène en $C_2$ à $C_{18}$, cycloalkylène en $C_5$ à $C_7$ ou (alkylène en $C_1$ à $C_4$)-di(cycloalkylène en $C_5$ à $C_7$)

ou

les groupes $R_1$, $R_2$ et $R_3$ forment ensemble avec les atomes d'azote auquel ils sont liés un noyau hétérocyclique

de 5 à 10 chaînons ou

$R_4$ et $R_5$ forment ensemble avec l'atome d'azote auquel ils sont liés un noyau hétérocyclique de 5 à 10 chaînons,

$R_6$ représente un atome d'hydrogène, un groupe alkyle en $C_1$ à $C_8$, O·, $-CH_2CN$, alcényle en $C_3$ à $C_6$, phénylalkyle en $C_7$ à $C_9$, phénylalkyle en $C_7$ à $C_9$ substitué sur le groupe phényle par un groupe alkyle en $C_1$ à $C_4$ ou acyle en $C_1$ à $C_8$,

$n_1$ est un nombre allant de 2 à 50 et

au moins un des groupes $R_1$, $R_3$, $R_4$ et $R_5$ représente un groupe de formule II;

le composant b) représente un produit qu'on peut obtenir en mettant à réagir un produit, obtenu par la réaction d'une polyamine de formule IIIa avec le chlorure d'acide cyanurique, avec un composé de formule IIIb,

$$H_2N-(CH_2)_{n_2'}-NH-(CH_2)_{n_2''}-NH-(CH_2)_{n_2'''}-NH_2 \quad \text{(IIIa)}$$

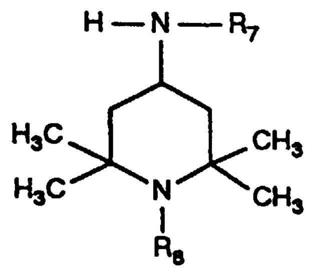

(IIIb)

formules dans lesquelles

$n_2'$, $n_2''$ et $n_2'''$ représentent indépendamment les uns des autres un nombre de 2 à 12,

$R_7$ représente un atome d'hydrogène, un groupe alkyle en $C_1$ à $C_{12}$, cycloalkyle en $C_5$ à $C_{12}$, phényle ou phénylalkyle en $C_7$ à $C_9$ et

$R_8$ possède une des significations indiquées pour $R_6$;

le composant c) est au moins un composé des formules IVa et IVb,

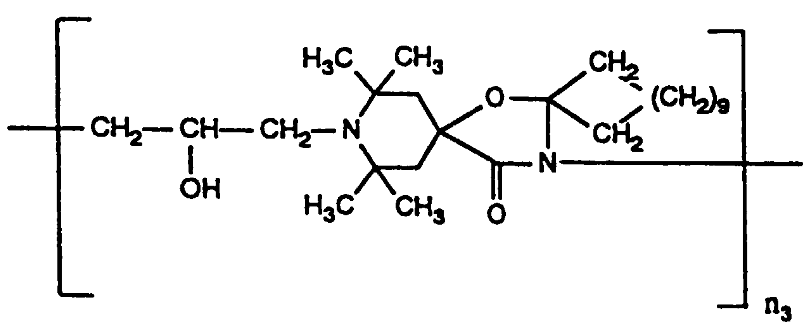

(IVa)

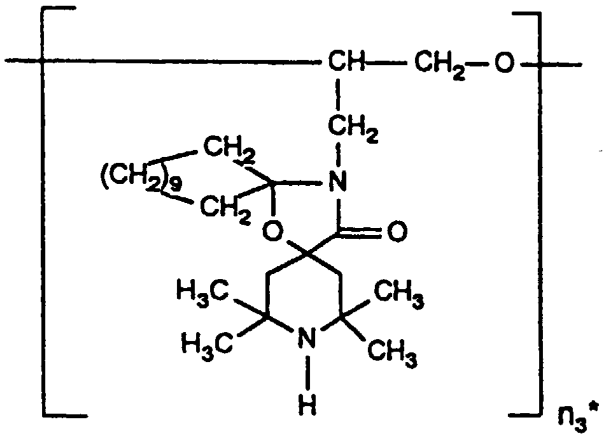

(IVb)

dans lesquelles $n_3$ et $n_3$* représentent indépendamment l'un de l'autre un nombre de 2 à 50;

le composant d) est au moins un composé de formule V,

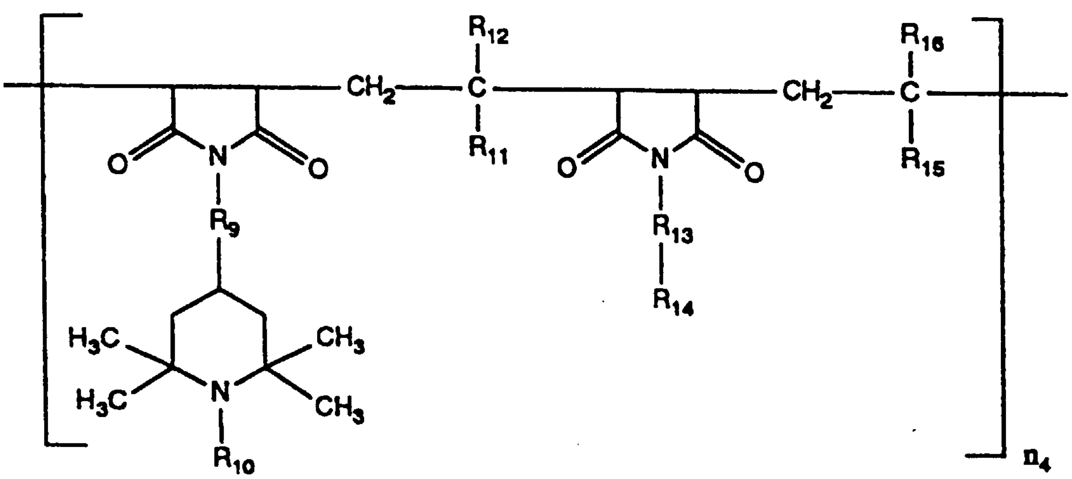

(V)

dans laquelle

| | |
|---|---|
| $R_9$ et $R_{13}$ | représentent indépendamment l'un de l'autre une simple liaison ou un groupe -N($X_1$)-CO-$X_2$-CO-N{$X_3$)-, |
| $X_1$ et $X_3$ | représentent indépendamment l'un de l'autre un atome d'hydrogène, un groupe alkyle en $C_1$ à $C_{18}$, cycloalkyle en $C_5$ à $C_{12}$, Phényl, Phénylalkyle en $C_7$ à $C_9$ ou un groupe de formule II, |
| X2 | représente une simple liaison ou un groupe alkylène en $C_1$ à $C_4$, |
| $R_{10}$ | possède une des significations indiquées pour $R_6$, |
| $R_{11}$, $R_{12}$, $R_{15}$ et $R_{16}$ | représentent indépendamment les uns des autres un atome d'hydrogène, un groupe alkyle en $C_1$ à $C_{30}$, cycloalkyle en $C_5$ à $C_{12}$ ou phényle, |
| $R_{14}$ | représentent un atome d'hydrogène, un groupe alkyle en $C_1$ à $C_{30}$, cycloalkyle en $C_5$ à $C_{12}$, phénylalkyle en $C_7$ à $C_9$, phényle ou un groupe de formule II et |
| $n_4$ | représente un nombre de 1 à 50; |

le composant e) est au moins un composé de formule VI,

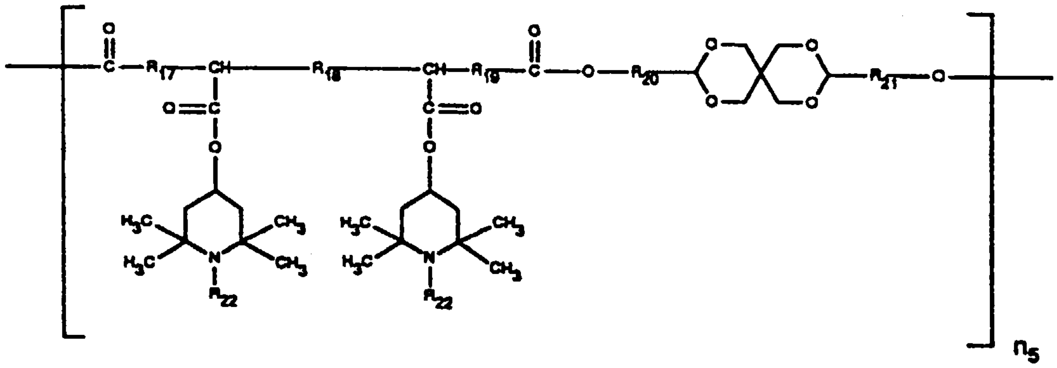

(VI)

dans laquelle

| | |
|---|---|
| $R_{11}$, $R_{18}$, $R_{19}$, $R_{20}$ et $R_{21}$ | représentent indépendamment les uns des autres une simple liaison ou un groupe alkylène en $C_1$ à $C_{10}$, |
| $R_{22}$ | possède une des significations indiquées pour $R_6$ et |
| $n_5$ | représente un nombre allant de 1 à 50. |

**2.** Mélange de stabilisants selon la revendication 1, dans lequel $R_6$, $R_8$, $R_{10}$ et $R_{22}$ représentent indépendamment les uns des autres un atome d'hydrogène ou un groupe Méthyle.

**3.** Mélange de stabilisants selon la revendication 1, dans lequel

| | |
|---|---|
| $R_1$, $R_3$, $R_4$ et $R_5$ | représentent indépendamment les uns des autres un atome d'hydrogène, un groupe alkyle en $C_1$ à $C_8$, Cycloalkyle en $C_5$ à $C_8$, Phényle, Phénylalkyle en $C_7$ à $C_9$ ou un groupe de formule II ou |
| les groupes $R_4$ et $R_5$ | forment ensemble avec l'atome d'azote auquel ils sont liés un hétérocycle à 6 chaînons |
| $R_2$ | est un groupe alkylène en $C_2$ à $C_{10}$ et |
| $n_1$ | est un nombre de 2 à 25; |
| $n_2$, $n_2$'' et $n_2$''' | représentent indépendamment les uns des autres un nombre de 2 à 4 et |
| $R_7$ | représente un groupe alkyle en $C_1$ à $C_4$; |
| $n_3$ et $n_3$* | représentent indépendamment les uns des autres un nombre de 2 à 25; |
| $R_9$ et $R_{13}$ | représentent une simple liaison ou un groupe $-N(X_1)-CO-X_2-CO-N(X_3)-$, |
| $X_1$ et $X_3$ | représentent indépendamment l'un de l'autre un atome d'hydrogène ou un groupe alkyle en $C_1$ à $C_4$, $X_2$ représente une simple liaison, |
| $R_{11}$ et $R_{15}$ | représentent un groupe alkyle en $C_1$ à $C_{25}$, ou un groupe Phényle, |
| $R_{12}$ et $R_{16}$ | représentent un atome d'hydrogène ou un groupe alkyle en $C_1$ à $C_4$, |
| $R_{14}$ | représente un groupe alkyle en $C_1$ à $C_{25}$ ou un groupe de formule II et |
| $n_4$ | représente un nombre de 1 à 25; |
| $R_{17}$, $R_{19}$, $R_{20}$ et $R_{21}$ | représentent un groupe alkylène en $C_1$ à $C_4$, |
| $R_{18}$ | représente une simple liaison et |
| $n_5$ | représente un nombre de 1 à 25. |

**4.** Mélange de stabilisants selon la revendication 1, dans lequel le composant a) est au moins un composé de formule (I-a), (I-b) ou (I-c),

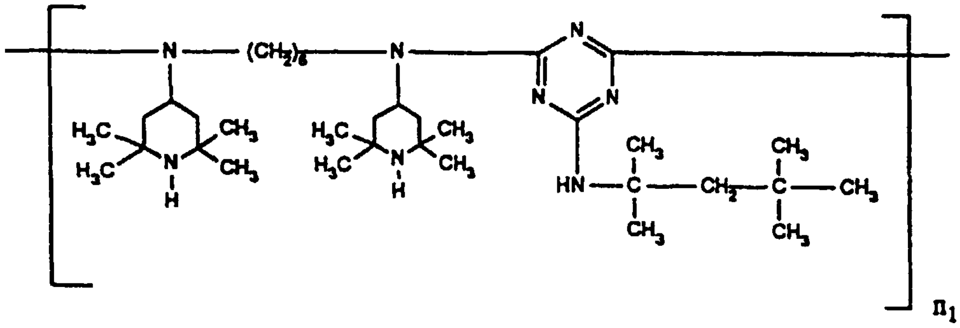

(I-a)

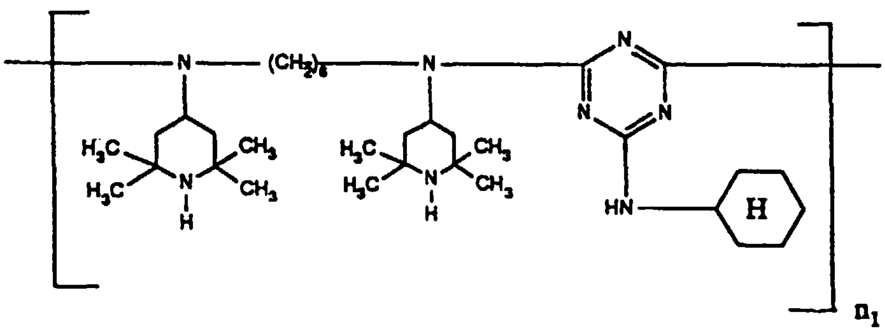

(I-b)

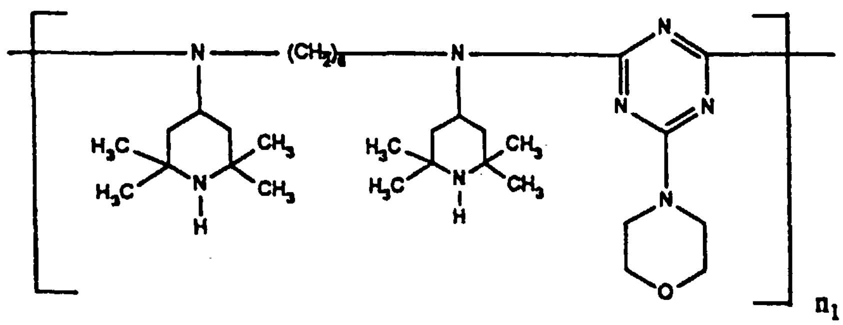

(I-c)

formules dans lesquelles $n_1$ représente un nombre de 2 à 20;

le composant b) représente un produit qu'on peut obtenir en mettant à réagir un produit, obtenu par la réaction d'une polyamine de formule

$$H_2N-(CH_2)_3-NH-(CH_2)_2-NH-(CH_2)_3-NH_2$$

avec le chlorure d'acide cyanurique, avec un composé de formule

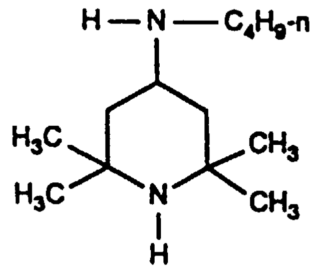

;

dans le composant c) $n_3$ et $n_3^*$ représentent indépendamment l'un de l'autre un nombre de 2 à 20; le composant d) est au moins un composé de formule (V-a), (V-b) ou (V-c),

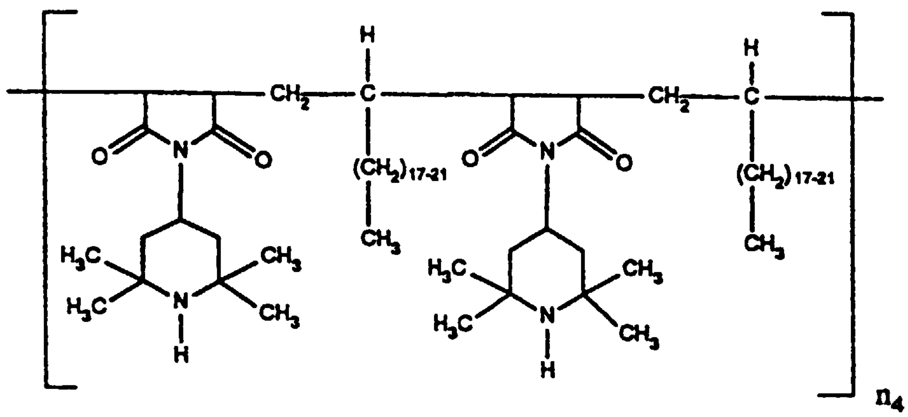

(V-a)

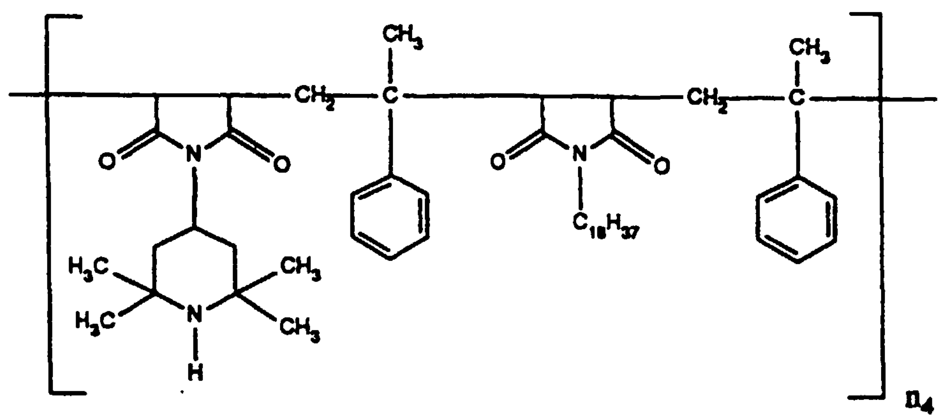

(V-b)

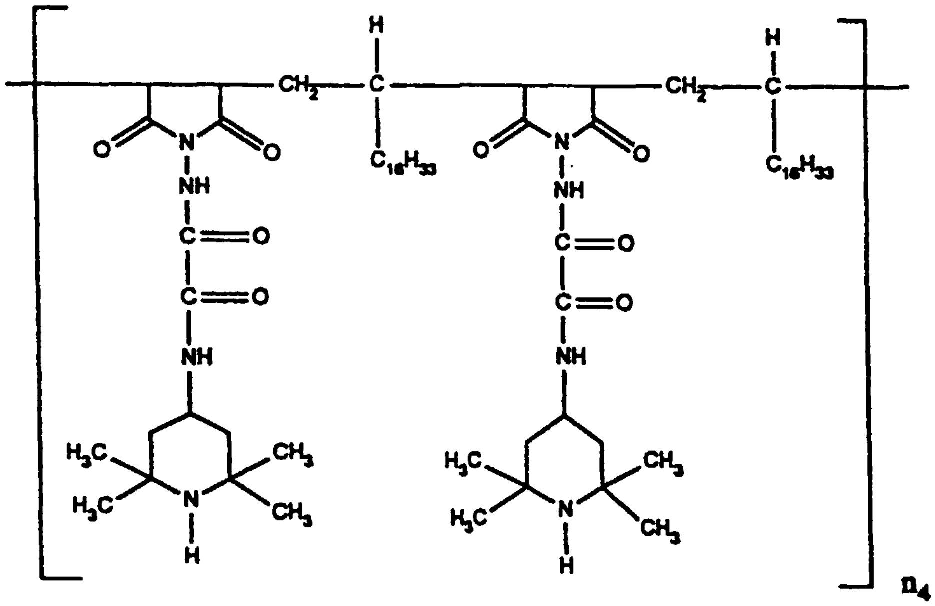

(V-c)

formules dans lesquelles $n_4$ est un nombre de 1 à 20;
le composant e) est au moins un composé de formule VI-a,

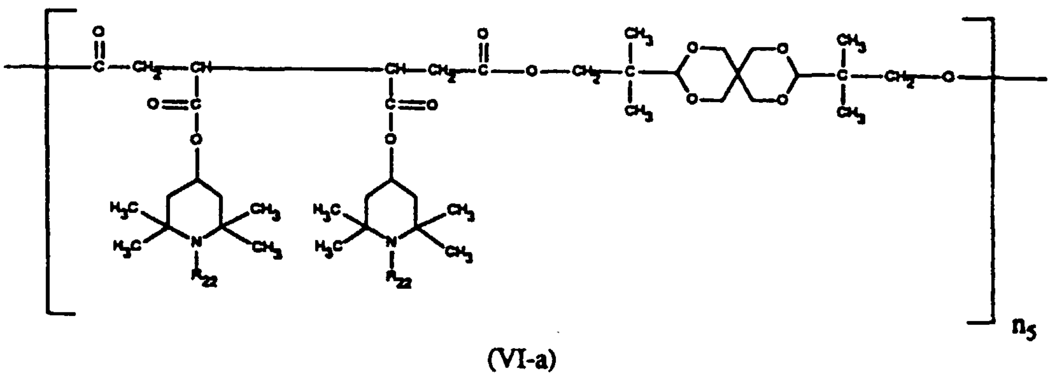

(VI-a)

dans laquelle $R_{22}$ représente un atome d'hydrogène ou un groupe Méthyle et $n_5$ est un nombre de 1 à 20.

**5.** Mélange de stabilisants selon la revendication 1, contenant les composants a) et d).

**6.** Mélange de stabilisants selon la revendication 1, contenant les composants a) et e).

**7.** Mélange de stabilisants selon la revendication 1, contenant les composants b) et d).

**8.** Mélange de stabilisants selon la revendication 1, contenant les composants b) et e).

**9.** Mélange de stabilisants selon la revendication 1, contenant les composants c) et d).

**10.** Mélange de stabilisants selon la revendication 1, contenant les composants c) et e).

**11.** Mélange de stabilisants contenant indépendamment l'un de l'autre 2 composés choisis parmi les composants d) et e) définis à la revendication 1 avec la condition que ces composés ne doivent pas être identiques.

**12.** Mélange de stabilisants contenant indépendamment l'un de l'autre 2 composants choisis parmi les composés d-1), d-2), d-3), e-1) et e-2), dans lesquels les composants sont différents et le composant d-1) représente au moins un composé de formule V-a, le composant d-2) au moins un composé de formule V-b, le composant d-3) au moins

un composé de formule V-c, le composant e-1) au moins un composé de formule VI-a, dans lequel $R_{22}$ représente un atome d'hydrogène, et le composant e-2) représente au moins un composé de formule VIa dans lequel $R_{22}$ est un groupe Méthyle, et les formules V-a, V-b, V-c et VIa possèdent les définitions indiquées à la revendication 4.

**13.** Composition contenant un matériau organique sensible à la dégradation par oxydation, thermique ou induite par la lumière et un mélange de stabilisants selon la revendication 1.

**14.** Composition selon la revendication 13, dans laquelle le matériau organique est une polyoléfine.

**15.** Composition selon la revendication 13, dans laquelle le matériau organique est le polyéthylène, le polypropylène ou un copolymère de polyéthylène ou de polypropylène.

**16.** Procédé de stabilisation d'un matériau organique contre la dégradation par oxydation, thermique ou induite par la lumière, caractérisé en ce que, l'on incorpore dans le matériau organique un mélange de stabilisants selon la revendication 1.

**17.** Composition contenant un matériau organique sensible à la dégradation par oxydation, thermique ou induite par la lumière et un mélange de stabilisants selon la revendication 11.